# EUROPÄISCHE PATENTSCHRIFT

(11) **EP 4 095 163 B1**
(45) Veröffentlichungstag und Bekanntmachung des Hinweises auf die Patenterteilung: **22.11.2023**
(21) Anmeldenummer: 22174773.6
(22) Anmeldetag: 23.05.2022
(51) Int. Cl.: C08C 19/06, C08C 19/40, C08G 59/02, C08G 59/14, C08G 59/16, C08G 59/34, C08G 63/08, C08G 65/26, C11D 3/00

(54) **ENTSCHÄUMERZUSAMMENSETZUNG AUF BASIS VON ORGANOFUNKTIONELL MODIFIZIERTEN POLYBUTADIENEN**
DEFOAMER COMPOSITION BASED ON POLYSILOXANES WITH ORGANOFUNCTIONALLY MODIFIED POLYBUTADIENES
COMPOSITION D'AGENT ANTIMOUSSANT À BASE DE POLYBUTADIÈNES MODIFIÉS ORGANO-FONCTIONNELS

(30) Priorität: 27.05.2021 EP 21176163
(43) Veröffentlichungstag der Anmeldung: 30.11.2022
(73) Patentinhaber: Evonik Operations GmbH, 45128 Essen (DE)
(72) Erfinder: Favresse, Philippe, 40880 Ratingen (DE); Schulz, Alexander, 53844 Troisdorf (DE); Fiedel, Michael, 45239 Essen (DE); Otto, Sarah, 45138 Essen (DE); Schubert, Frank, 47506 Neukirchen-Vluyn (DE); Schierle, Thorsten, 45289 Essen (DE); Semmler, Heike, 47495 Rheinberg (DE); Stüttgen, Andreas, 45529 Hattingen (DE)
(74) Vertreter: Evonik Patent Association

(56) Entgegenhaltungen:
- Evonik Operations: "Product information POLYVEST 130 NON-FUNCTIONALIZED LIQUID POLYBUTADIENE GENERAL DESCRIPTION", , 26. Januar 2021 (2021-01-26), XP055861393, Gefunden im Internet: URL:https://coatingandadhesiveresins-web.p anpage.de/panpage_interface.asp?datenblatt =POLYVEST_130_en.pdf [gefunden am 2021-11-15]
- QING GAO ET AL: "Facile Synthesis of Amphiphilic Heterografted Copolymers with Crystalline and Amorphous Side Chains", MACROMOLECULAR CHEMISTRY AND PHYSICS,, Bd. 214, Nr. 15, 1. Januar 2013 (2013-01-01), Seiten 1677-1687, XP002799119, DOI: 10.1002/MACP.201300255

## Beschreibung

Die vorliegende Erfindung betrifft eine Entschäumerzusammensetzung enthaltend eine Verbindung auf Basis von Polybutadien.

Der Begriff Entschäumer umfasst im vorliegenden Fall sowohl Produkte als auch Formulierungen, die Schaum verhindern, als auch solche, die Schaum zerstören sowie eine Entlüftung ermöglichen. In der Praxis sind die Übergänge zwischen diesen Produkteigenschaften fließend, so dass hier der gemeinsame Sammelbegriff Entschäumer verwendet wird.

In vielen technischen Verfahren, insbesondere, wenn in wässrigen Medien gearbeitet wird, ist es notwendig, die unerwünschte Bildung von Schaum während der Herstellungs- oder Verarbeitungsprozesse zurückzudrängen oder ganz zu unterbinden, da Schaum bzw. Schaumkronen, die sich bei Rühr- und Dispergiervorgängen oder in den Gebinden während des Abfüllvorganges bilden, die Produktionszeiten verlängern oder aber das Effektivvolumen der Anlage vermindern bzw. deren korrekte Arbeit sogar verhindern können, indem ein Überlaufen der Formulierung aus dem Mischkessel nicht vermieden werden kann und beim Applizieren dieser eine fehlende Farbübertragung unvermeidlich ist.

Dies kann erreicht werden, indem man Entschäumer hinzugibt, die schon bei sehr geringen Einsatzkonzentrationen ab etwa 0,001 Gew.-% in der Lage sind, unerwünschte Schäume zu vermeiden oder zu zerstören und gleichzeitig nach der Applikation der Systeme keine Oberflächenstörungen hervorzurufen und Luftinklusionen im Lack unterdrücken. In der Praxis müssen diese Aspekte mindestens genauso berücksichtigt werden wie eine gute Entschäumung.

Unter Oberflächenstörungen sind für den Anwender unerwünschte Eigenschaften wie beispielsweise Pinholes, Krater, Glanzverlust, Orangenschaleneffekt, Runzelbildung und Haftungsverlust im Beschichtungssystem zu verstehen. Für den Anwender ist aber auch eine entsprechende Langzeitstabilität des Entschäumers in Formulierungen von hoher Bedeutung, da oftmals Produkte wie Farben nicht umgehend, sondern mitunter erst nach längerer Lagerung verbraucht werden. Bei Lagerung unter extremen klimatischen Bedingungen (Hitze und Sonneneinstrahlung) kann mitunter die Wirksamkeit einer Entschäumerformulierung schon nach kurzer Zeit zusammenbrechen.

Typische Wirkstoffe für die Formulierung von Entschäumern sind Polysiloxane, Mineral- und Pflanzenöle oder Polymere. Es ist bekannt, durch Kombination der Wirkstoffe untereinander, aber auch durch Zusatz feinteiliger hydrophober Festkörper, wie beispielsweise Kieselsäuren, lassen sich auf spezifische Anwendungen zugeschnittene, besonders wirksame Entschäumer formulieren.

Entschäumer zur Entschäumung wässriger und nichtwässriger Medien, die als die Entschäumung maßgeblich beeinflussenden Wirkstoff Polyoxyalkylen Polysiloxan Polymerisate enthalten, zeigen eine besondere Wirksamkeit und Lagerstabilität. Dazu zählen sowohl die Schauminhibierung, die Entschäumung, die sehr gute Langzeitstabilität, als auch die hervorragende Verträglichkeit in wässrigen und nicht wässrigen Medien. Alle diese Eigenschaften sind für moderne Lackanwendungen von hoher Bedeutung.

Dem Fachmann ist daher bekannt, dass polyethermodifizierte Siloxane sehr effektive Entschäumerwirkstoffe darstellen. Diese können als Reinsubstanz oder auch in formulierter Form eingesetzt werden. Polyethersiloxane erfahren durch das produktionsbedingte Vorhandensein von Spuren an zyklischen Siloxanen zunehmend regulatorischem Druck, da diese unlängst in Europa von der ECHA wegen ihrer persistenten, bioakkumulativen und toxischen (PBT) bzw. stark persistenten und stark bioaccumulativen Eigenschaften (vPvB) als "Substances of very high concern" (SVHC) gekennzeichnet wurden. Die Anwesenheit von zyklischen Siloxanen in Konzentrationen ≥ 0,1 Gew.-% führt damit zu einer entsprechenden Kennzeichnung, was die Vermarktungsmöglichkeiten in Europa stark einschränkt. Es ist ferner erfahrungsgemäß zu erwarten, dass auch andere globalen Länderregulierungen sich der europäischen Sichtweise anschließen, was die Vermarktungsreichweite weiter einschränkt.

Der Erfolg von siloxanbasierten Entschäumern gründet sich auf deren weiten Einstellbarkeit von (physiko-)chemischen Eigenschaften, welche ursächlich in der breiten stofflichen Vielfalt durch Topologieeffekten des Siloxanes, aber auch der Wahl der organisch-polymeren Modifikation und deren Funktionalitätsdichte am Siloxangrundkörper resultiert. In der einfachsten Modellvorstellung der Entschäumerwirkung muss der Entschäumer unverträglich in der ihn umgebenden Matrix sein. Sein grenzflächenaktives Potential lässt ihn sodann zur nächstgelegenen Grenzflüche "Flüssigkeit-Gasblase" bewegen, diese dann penetrieren und beim Aufspreiten entlang der Grenzfläche die Gasblase zum Bersten zwingen. In dieser Modellvorstellung spielt also die (Un-)Löslichkeit des Entschäumers in Bezug zum umgebenden Medium eine entscheidende Rolle. Die gezielte Einstellbarkeit der Hydrophilie (durch den Polyether) bzw. der Hydrophobizität (durch das Siloxangerüst) ermöglicht eine maßgeschneiderte Einstellung der Entschäumerleistung für das jeweilige Matrixsystem. Im Weiteren ist eine Verträglichkeit des Entschäumers mit weiteren in der Anwendung vorhandenen Stoffen essentiell. So muss ein Entschäumer im Bereich der Farb- und Lackanwendungen nicht so unverträglich sein, dass er lacktechnische Defekte generiert, die das Applikationsbild nachteilig beeinflussen, sondern vielmehr zu einem anwendungstechnisch befriedigenden Endergebnis führt.

Auch sind aus dem Stand der Technik silikonfreie Entschäumer, wie z. B Polybutadiene, bekannt.

Siehe z.B. Polyvest^{®} 130 der Firma Evonik (https://coatingandadhesiveresins-web.panpage.de/ panpage_interface.asp?datenblatt=P0LYVEST_130_en.pdf).

Der Nachteil hierbei liegt in der Eingeschränktheit der Einstellbarkeit der Kompatibilität.

Es ist daher wünschenswert, eine silikonfreie Entschäumerzusammensetzung bereitzustellen, die eine breite Einstellbarkeit der Entschäumerleistung und Verträglichkeit ermöglicht, sowie zumindest einen Nachteil des Standes der Technik überwindet.

Zur Lösung der Aufgabe wird daher eine Entschäumerzusammensetzung enthaltend eine Verbindung auf Basis von Polybutadien mit mindestens einer Wiederholungseinheit ausgewählt aus der Gruppe bestehend aus den zweibindigen Resten 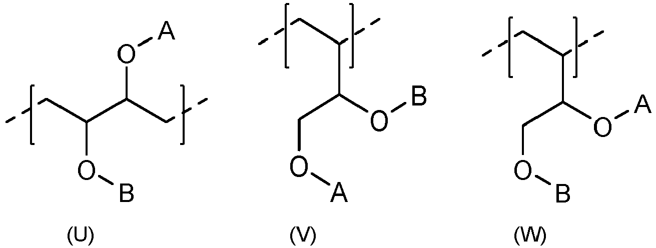 wobei
- A: jeweils unabhängig voneinander ein einbindiger organischer Rest oder ein Wasserstoffrest ist,
bevorzugt jeweils unabhängig voneinander ausgewählt ist aus der Gruppe bestehend aus einbindigen Kohlenwasserstoffresten mit 1 bis 6 Kohlenstoffatomen,
besonders bevorzugt jeweils unabhängig voneinander ausgewählt ist aus der Gruppe bestehend aus Alkylresten mit 1 bis 4 Kohlenstoffatomen;
- B: jeweils unabhängig voneinander ausgewählt ist aus der Gruppe bestehend aus Resten der Formel (4a), 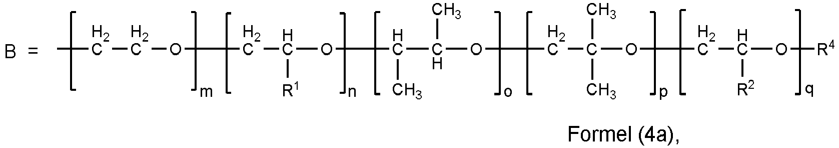 bevorzugt jeweils unabhängig voneinander ausgewählt ist aus der Gruppe bestehend aus Resten der Formel (4b), 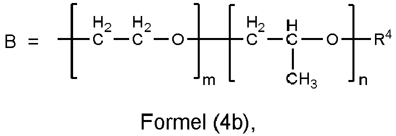 besonders bevorzugt jeweils unabhängig voneinander ausgewählt ist aus der Gruppe bestehend aus Resten der Formel (4c), 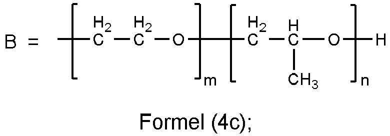
- R¹: jeweils unabhängig voneinander ausgewählt ist aus der Gruppe bestehend aus einbindigen Kohlenwasserstoffresten mit 1 bis 16 Kohlenstoffatomen,
bevorzugt jeweils unabhängig voneinander ein Alkylrest mit 1 bis 16 Kohlenstoffatomen oder ein Phenylrest ist,
besonders bevorzugt jeweils unabhängig voneinander ein Methylrest, ein Ethylrest oder ein Phenylrest ist;
- R²: ein Rest der Formel -CH₂-O-R³ ist;
- R³: jeweils unabhängig voneinander ausgewählt ist aus der Gruppe bestehend aus einbindigen Kohlenwasserstoffresten mit 3 bis 18 Kohlenstoffatomen;
bevorzugt jeweils unabhängig voneinander ein Allylrest, ein Butylrest, ein Alkylrest mit 8 bis 15 Kohlenstoffatomen oder ein Phenylrest, der mit einbindigen Resten ausgewählt aus Kohlenwasserstoffresten mit 1 bis 4 Kohlenstoffatomen substituiert sein kann, ist; besonders bevorzugt ein tert-Butylphenylrest oder ein o-Kresylrest ist;
- R⁴: jeweils unabhängig voneinander ein einbindiger organischer Rest mit 1 bis 18 Kohlenstoffatomen oder Wasserstoff, bevorzugt Wasserstoff ist;
und
- m, n, o, p und q: jeweils unabhängig voneinander 0 bis 300, bevorzugt 0 bis 200, besonders bevorzugt 0 bis 100 betragen, mit der Maßgabe, dass die Summe aus m, n, o, p und q größer als 1, bevorzugt größer als 5, besonders bevorzugt größer als 10 ist; dass Rest B mindestens eine Wiederholungseinheit gemäß 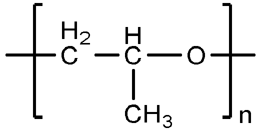
aufweist;
und jede Permutation der Wiederholungseinheiten im Rest B mitumfasst ist, vorgeschlagen.

Im Sinne dieser Erfindung werden Medium, Lacksystem, Lack- oder Farbformulierung, Lackrezeptur, Beschichtungszusammensetzung als Synonyme verstanden. Es sind Systeme, die zu entschäumen sind.

Die erfindungsgemäßen Gegenstände werden nachfolgend beispielhaft beschrieben, ohne dass die Erfindung auf diese beispielhaften Ausführungsformern beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Werden nachfolgend Mittelwerte angegeben, so handelt es sich, wenn nicht anders angegeben, um Zahlenmittel. Werden nachfolgend Messwerte, Parameter oder Stoffeigenschaften angegeben, die durch Messung bestimmt werden, so handelt es sich, wenn nicht anders angegeben, um Messwerte, Parameter oder Stoffeigenschaften gemessen bei 25 °C sowie vorzugsweise bei einem Druck von 101325 Pa (Normaldruck).

Werden nachfolgend Zahlenbereiche in der Form "X bis Y" angegeben, wobei X und Y die Grenzen des Zahlenbereichs darstellen, so ist dies gleichbedeutend mit der Angabe "von mindestens X bis einschließlich Y", sofern nicht anders angegeben. Bereichsangaben schließen die Bereichsgrenzen X und Y also mit ein, sofern nicht anders angegeben.

Wo immer Moleküle beziehungsweise Molekülfragmente ein oder mehrere Stereozentren aufweisen oder aufgrund von Symmetrien in Isomere unterschieden werden können oder aufgrund anderer Effekte, wie zum Beispiel eingeschränkter Rotation, in Isomere unterschieden werden können, sind alle möglichen Isomere von der vorliegenden Erfindung miteingeschlossen.

Alle Formeln beschreiben Verbindungen oder Reste, die aus Wiederholungseinheiten aufgebaut sind, wie beispielsweise sich wiederholende Fragmente, Blöcke oder Monomereinheiten, und eine Molgewichtsverteilung aufweisen können. Die Häufigkeit der Wiederholungseinheiten wird durch Indizes angegeben. Die in den Formeln verwendeten Indizes sind als statistische Mittelwerte (Zahlenmittel) zu betrachten. Die verwendeten Indexzahlen sowie die Wertbereiche der angegebenen Indizes werden als Mittelwerte der möglichen statistischen Verteilung der tatsächlichen vorhandenen Strukturen und/oder deren Mischungen verstanden. Die verschiedenen Fragmente beziehungsweise Wiederholungseinheiten der in den Formeln beschriebenen Verbindungen können statistisch verteilt sein. Statistische Verteilungen sind blockweise aufgebaut mit einer beliebigen Anzahl an Blöcken und einer beliebigen Sequenz oder unterliegen einer randomisierten Verteilung, sie können auch alternierend aufgebaut sein, oder auch über die Kette, sofern eine solche vorliegt, einen Gradienten bilden, insbesondere können sie auch alle Mischformen bilden, bei denen gegebenenfalls Gruppen unterschiedlicher Verteilungen aufeinander folgen können. In den nachfolgenden Formeln sind alle Permutationen von Wiederholungseinheiten mitumfasst. Werden also im Rahmen der vorliegenden Erfindung Verbindungen, wie z.B. Polybutadiene (A), epoxyfunktionelle Polybutadiene (C), hydroxyfunktionelle Polybutadiene (E), polyethermodifizierte Polybutadiene (G) oder polyethermodifizierte Polybutadiene (K) enthaltend endverkappte Polyetherreste beschrieben, die verschiedene Einheiten mehrfach aufweisen können, so können diese sowohl ungeordnet, z.B. statistisch verteilt, oder geordnet in diesen Verbindungen vorkommen. Die Angaben zur Anzahl bzw. relativen Häufigkeit von Einheiten in solchen Verbindungen sind als Mittelwert (Zahlenmittel), gemittelt über alle entsprechenden Verbindungen, zu verstehen. Spezielle Ausführungen können dazu führen, dass die statistischen Verteilungen durch die Ausführungsform Beschränkungen erfahren. Für alle Bereiche, die nicht von der Beschränkung betroffen sind, ändert sich die statistische Verteilung nicht.

Entschäumer und Entschäumerwirkstoff sind als Synonyme zu verstehen.

Erstaunlicherweise wurde festgestellt, dass die erfindungsgemäße Entschäumerzusammensetzung eine Verbindung enthält, die vorteilhafterweise nicht auf Silikon basiert und zudem die Möglichkeit gibt, die Entschäumerwirkung und die Verträglichkeit einzustellen. Einerseits konnte die Vielfalt des Polybutadiens genutzt werden; andererseits konnte durch Kombinationen bestimmter topologisch unterschiedlichen Polyethern und deren Funktionalitätsdichte am Polybutadiengrundkörper die Verträglichkeit verbessert werden.

Überraschenderweise wurde auch festgestellt, dass zumindest ein Rest B mindestens eine Wiederholungseinheit gemäß 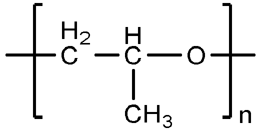 aufweist, um sowohl eine zufriedenstellende entschäumende Wirkung als auch eine zufriedenstellende Kompatibilität der erfindungsgemäßen Zusammensetzung zu erreichen.

Der Begriff "Entschäumung" wird häufig verwendet, um die Entfernung von Gasblasen aus dem Lack zu beschreiben. In bestimmten Fällen sollte jedoch zwischen "Entschäumung" und "Entlüftung" unterschieden werden. Zuerst müssen die Gasblasen an die Oberfläche gelangen. Die dann an der Oberfläche stattfindende Beseitigung der Schaumblasen wird als Entschäumung bezeichnet. Entschäumer sind nur an der Oberfläche wirksam, wo sie die dort befindlichen Luftblasen beseitigen. Entlüfter müssen dagegen im gesamten Lackfilm ihre Wirkung entfalten. Schaum auf der Oberfläche. Entschäumer destabilisieren die Schaumblasen. Lufteinschluss im Lackfilm. Entlüfter beschleunigen die Migration der Blasen zur Oberfläche.

Vorzugsweise weist die erfindungsgemäße Zusammensetzung die Verbindung mit m, n, o, p und q jeweils unabhängig voneinander 0 bis 300, bevorzugt 0 bis 200, besonders bevorzugt 0 bis 100 auf, mit der Maßgabe, dass die Summe aus m, n, o, p und q größer als 1, bevorzugt größer als 5, besonders bevorzugt größer als 10 ist.

Besonders bevorzugt weist die erfindungsgemäße Zusammensetzung die Verbindung mit m, n, o, p und q jeweils unabhängig voneinander 0 bis 200, bevorzugt 0 bis 100, besonders bevorzugt 0 bis 50 auf, mit der Maßgabe, dass die Summe aus m, n, o, p und q größer als 1, bevorzugt größer als 5, besonders bevorzugt größer als 10 ist.

Bevorzugt weist die Verbindung für die erfindungsgemäße Zusammensetzung eine zahlenmittlere Molmasse Mₙ des Polybutadienteils von 200 g/mol bis 20.000 g/mol, bevorzugt von 500 g/mol bis 10.000 g/mol, besonders bevorzugt von 700 g/mol bis 5.000 g/mol auf.

Für die erfindungsgemäße Zusammensetzung weist der Polybutadienteil der Verbindung 0 % bis 80 %, bevorzugt 0 % bis 30 %, besonders bevorzugt 0 % bis 10 %, ganz besonders bevorzugt 0 % bis 5 % der enthaltenen Doppelbindungen 1,2-Vinyl-Doppelbindungen auf und 20 % bis 100 %, bevorzugt 70 % bis 100 %, besonders bevorzugt 90 % bis 100 %, ganz besonders bevorzugt 95 % bis 100 % der enthaltenden Doppelbindungen 1,4-Doppelbindungen.

Vorzugsweise wurde für die erfindungsgemäße Zusammensetzung die Verbindung auf Basis von linearen Polybutadienen hergestellt.

Vorzugsweise weist die die Verbindung für die erfindungsgemäße Zusammensetzung keine seitständigen (kammständigen) Polybutadiene auf.

Vorzugsweise weist die Verbindung ausschließlich seitständige (kammständige) Wiederholungseinheiten (U), (V) und/oder (W) auf.

Vorzugsweise beträgt die mittlere Molmasse des Rests B der Verbindung von 40 g/mol bis 20.000 g/mol, bevorzugt von 100 g/mol bis 15.000 g/mol, besonders bevorzugt von 200 g/mol bis 10.000 g/mol.

Die Reste R¹, R², R³ und R⁴ können dabei jeweils unabhängig voneinander linear oder verzweigt, gesättigt oder ungesättigt, aliphatisch oder aromatisch, substituiert oder unsubstituiert sein.

Die allgemeine Schreibweise 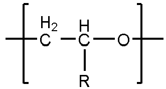 mit R = R¹ oder R² in Formel (4a) bzw. R = CH₃ in den Formeln (4b) und (4c) steht dabei sowohl für eine Einheit der Formel 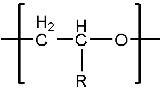 als auch eine für eine Einheit der Formel 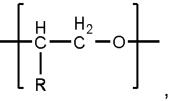 vorzugweise aber für eine Einheit der Formel

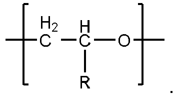

Die allgemeine Schreibweise 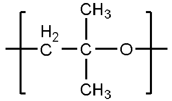 in Formel (4a) steht dabei sowohl für eine Einheit der Formel 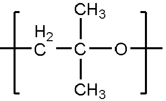 als auch eine für eine Einheit der Formel 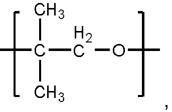 vorzugweise aber für eine Einheit der Formel

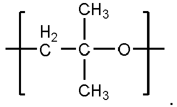

Es ist weiterhin bevorzugt, dass der Rest R⁴ jeweils unabhängig voneinander ausgewählt ist aus der Gruppe bestehend aus einwertigen Kohlenwasserstoffresten mit 1 bis 18 Kohlenstoffatomen, Acylresten -C(=O)R⁵, Urethanresten -C(=O)NH-R⁶, Carbonatresten -C(=O)O-R⁷ und Wasserstoff; weiter bevorzugt ist R⁴ jeweils unabhängig voneinander ausgewählt ist aus der Gruppe bestehend aus Alkylresten mit 1 bis 18 Kohlenstoffatomen, Alkylenresten mit 1 bis 18 Kohlenstoffatomen, Acylresten -C(=O)R⁵, Urethanresten -C(=O)NH-R⁶, Carbonatresten -C(=O)O-R⁷ und Wasserstoff; besonders bevorzugt ist R⁴ Wasserstoff.

R⁵ ist jeweils unabhängig voneinander ein Alkyl- oder ein Alkenylrest mit 1 bis 18 Kohlenstoffatomen, bevorzugt mit 1 bis 10 Kohlenstoffatomen, besonders bevorzugt ein Methylrest.

R⁶ ist jeweils unabhängig voneinander ein Alkyl- oder ein Arylrest mit 1 bis 18 Kohlenstoffatomen, bevorzugt mit 6 bis 18 C-Atomen.

R⁷ ist jeweils unabhängig voneinander ein Alkylrest mit 1 bis 18 Kohlenstoffatomen, bevorzugt mit 1 bis 2 Kohlenstoffatomen.

Die Verbindung weist vorzugsweise auch Wiederholungseinheiten (Y) und (Z) gemäß 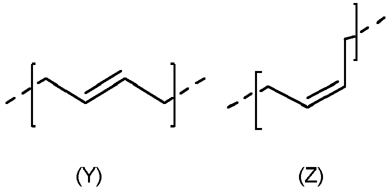 auf.

Es ist dabei bevorzugt, dass die Summe aller Wiederholungseinheiten (U), (V) und (W) dividiert durch die Summe aller Wiederholungseinheiten (U), (V), (W), (X), (Y) und (Z) des mindestens einen polyethermodifizierten Polybutadiens (G) bzw. (K) von >0 % bis 70 %, bevorzugt von 1 % bis 50 %, weiter bevorzugt von 2 % bis 40 %, noch weiter bevorzugt von 3 % bis 30 %, besonders bevorzugt von 4 % bis 20 % beträgt.

Das bedeutet, dass >0 % bis 70 %, bevorzugt 1 % bis 50 %, weiter bevorzugt von 2 % bis 40 %, noch weiter bevorzugt von 3 % bis 30 %, besonders bevorzugt von 4 % bis 20 % der Gesamtheit der Wiederholungseinheiten (U), (V), (W), (X), (Y) und (Z) polyethermodifiziert sind.

Die zahlenmittlere Molmasse Mₙ, gewichtsmittlere Molmasse M_{w} und Polydispersität des Polybutadienteils des polyethermodifizierten Polybutadiens (G) bzw. (K) sind beliebig. Unter dem Polybutadienteil wird dabei der Teil des polyethermodifizierten Polybutadiens (G) bzw. (K) verstanden, der vom verfahrensgemäß eingesetzten Polybutadien (A) stammt.

Es ist bevorzugt, dass die zahlenmittlere Molmasse Mₙ des Polybutadienteils des polyethermodifizierten Polybutadien (G) bzw. (K) von 200 g/mol bis 20000 g/mol, bevorzugt von 500 g/mol bis 10000 g/mol, besonders bevorzugt von 700 g/mol bis 5000 g/mol beträgt.

Alternativ ist es bevorzugt, dass die zahlenmittlere Molmasse Mₙ des Polybutadienteils des polyethermodifizierten Polybutadiens (G) bzw. (K) von 2100 g/mol bis 20000 g/mol, besonders bevorzugt von 2200 g/mol bis 10000 g/mol, ganz besonders bevorzugt von 2300 g/mol bis 5000 g/mol beträgt.

Die zahlenmittlere Molmasse Mₙ des Polybutadienteils ist dabei als die zahlenmittlere Molmasse Mₙ des zugrundeliegenden Polybutadiens (A) definiert.

Es ist weiterhin bevorzugt, dass das polyethermodifizierte Polybutadien (G) bzw. (K) im Zahlenmittel 5 bis 360, besonders bevorzugt 10 bis 180, ganz besonders bevorzugt 15 bis 90 Wiederholungseinheiten aufweist, wobei die Wiederholungseinheiten aus der Gruppe bestehend aus (U), (V), (W), (X), (Y) und (Z) ausgewählt sind.

Alternativ ist es bevorzugt, dass das polyethermodifizierte Polybutadien (G) bzw. (K) im Zahlenmittel 35 bis 360, besonders bevorzugt 40 bis 180, ganz besonders bevorzugt 45 bis 90 Wiederholungseinheiten aufweist, wobei die Wiederholungseinheiten aus der Gruppe bestehend aus (U), (V), (W), (X), (Y) und (Z) ausgewählt sind.

Es ist weiterhin bevorzugt, dass die polyethermodifizierten Polybutadiene (G) bzw. (K) dadurch gekennzeichnet sind, dass 0 % bis 80 %, bevorzugt 0 % bis 30 %, besonders bevorzugt 0 % bis 10% und ganz besonders bevorzugt 0% bis 5 % der enthaltenen Doppelbindungen 1,2-Vinyl-Doppelbindungen sind und 20% bis 100%, bevorzugt 70 % bis 100 %, besonders bevorzugt 90 % bis 100 % und ganz besonders bevorzugt 95 % bis 100 % der enthaltenen Doppelbindungen 1,4-Doppelbindungen sind.

Ganz besonders bevorzugt sind solche polyethermodifizierten Polybutadiene (G) bzw. (K), die sich von den oben beschriebenen Polybutadienen Polyvest^{®} 110 und Polyvest^{®} 130 der Evonik Industries AG / Evonik Operations GmbH sowie Lithene ultra AL und Lithene ActiV 50 von Synthomer PLC ableiten.

Die Molmasse und die Polydispersität der Reste B ist beliebig. Es ist aber bevorzugt, dass die mittlere Molmasse der Reste B von 100 g/mol bis 20000 g/mol, bevorzugt von 200 g/mol bis 15000 g/mol, besonders bevorzugt von 400 g/mol bis 10000 g/mol beträgt. Die mittlere Molmasse der Reste B kann aus der Einwaage der eingesetzten Monomere bezogen auf die Anzahl der OH-Gruppen des eingesetzten hydroxyfunktionellen Polybutadiens (E) berechnet werden. Werden also beispielsweise 40 g Ethylenoxid eingesetzt und weist die Menge des eingesetzten hydroxyfunktionellen Polybutadiens (E) 0,05 mol OH-Gruppen auf, so beträgt die mittlere Molmasse des Rests B 800 g/mol.

Die polyethermodifizierten Polybutadiene (G) bzw. (K) sind je nach Zusammensetzung und Molmasse flüssig, pastös oder fest.

Die zahlenmittlere Molmasse Mₙ der polyethermodifizierten Polybutadiene (G) bzw. (K) beträgt bevorzugt von 1000 g/mol bis 6000 g/mol, weiter bevorzugt von 1500 g/mol bis 5000 g/mol, besonders bevorzugt von 2000 g/mol bis 4000 g/mol.

Ihre Polydispersität ist in weiten Bereichen variabel. Die Polydispersität des mindestens einen polyethermodifizierten Polybutadiens (G) bzw. (K) liegt nach GPC-Methode gegen PPG-Standard bevorzugt bei M_{w}/Mₙ von 1,5 bis 10, weiter bevorzugt zwischen 2 und 9, besonders bevorzugt zwischen 3 und 8.

Zugänge zu der Verbindung auf Basis von Polybutadien mit mindestens einer Wiederholungseinheit ausgewählt aus der Gruppe bestehend aus den zweibindigen Resten (U), (V) und/oder (W), wie oben beschrieben, ist der bisher unveröffentlichten europäischen Patentanmeldung EP 19212066.5 bzw. PCT/EP2020/083013 zu entnehmen.

Die bisher unveröffentlichten europäischen Patentanmeldung EP 19212066.5 bzw. PCT/EP2020/083013 widmet sich der Herstellung von Verbindungen auf Basis von Polybutadienen, die für die erfindungsgemäße Entschäumerzusammensetzung geeignet sind. Darin wird ein Verfahren, das folgende Schritte umfasst, beschrieben:
a) Umsetzung mindestens eines Polybutadiens (A) mit mindestens einem Epoxidierungsreagenz (B) zu mindestens einem epoxyfunktionellen Polybutadien (C);
b) Umsetzung des mindestens einen epoxyfunktionellen Polybutadiens (C) mit mindestens einer hydroxyfunktionellen Verbindung (D) zu mindestens einem hydroxyfunktionellen Polybutadien (E);
c) Umsetzung des mindestens einen hydroxyfunktionellen Polybutadiens (E) mit mindestens einer epoxyfunktionellen Verbindung (F) zu mindestens einem polyethermodifizierten Polybutadien (G).

Überraschenderweise wurde darin offenbart, dass sich Polybutadiene mit hohem Anteil an 1,4-Einheiten und geringem Gehalt an vinylischen 1,2- Einheiten nach der Epoxidierung mit Wasserstoffperoxid leicht unter sauer katalysierter Ringöffnung mit OH-funktionellen Verbindungen in seitständig OH-funktionelle Polybutadiene (Polybutadienole) umwandeln und anschließend mit Alkylenoxiden alkoxylieren lassen.

Es ist bevorzugt, dass das Verfahren außerdem mindestens einen der folgenden optionale Schritte umfasst:
d) Umsetzung des mindestens einen polyethermodifizierten Polybutadiens (G) mit mindestens einem Endverkappungsreagenz (H) zu mindestens einem polyethermodifizierten Polybutadien (K) enthaltend endverkappte Polyetherreste;
e) Farbaufhellung des mindestens einen polyethermodifizierten Polybutadiens (G) bzw. (K). Vorzugsweise ist das Verfahren weiterhin dadurch gekennzeichnet, dass

| | |
|---|---|
| im Schritt a) | >0 % bis 70 %, bevorzugt 1 % bis 50 %, weiter bevorzugt 2 % bis 40 %, noch weiter bevorzugt 3% bis 30 % und besonders bevorzugt 4 % bis 20 % der Doppelbindungen des mindestens einen Polybutadiens (A) mit Hilfe von Perameisensäure, welche *in situ* aus Ameisensäure und H₂O₂ erzeugt wird, epoxidiert werden; |
| im Schritt b) | an die Epoxidgruppen des mindestens einen epoxyfunktionellen Polybutadiens (C) unter Ringöffnung ein oder mehrere kurzkettige Alkohole mit 1 bis 6 Kohlenstoffatomen, insbesondere Isobutanol, addiert werden, wobei bevorzugt ein oder mehrere saure Katalysatoren, insbesondere Trifluormethansulfonsäure, eingesetzt werden; |
| im Schritt c) | an die entstandenen seitständigen OH-Gruppen des mindestens einen hydroxyfunktionellen Polybutadiens (E) eine oder mehrere epoxyfunktionelle Verbindungen (F) ausgewählt aus Alkylenoxiden und ggf. weiteren epoxyfunktionellen Monomeren in einer Alkoxylierungsreaktion addiert werden, wobei bevorzugt zusätzlich ein Zn/Co-Doppelmetallcyanid-Katalysator oder basische Katalysatoren wie Amine, Guanidine, Amidine, Alkalihydroxide oder Alkalialkoholate verwendet werden; |
| Im Schritt d) | optional die Umsetzung des mindestens einen polyethermodifizierten Polybutadiens (G) mit mindestens einem Endverkappungsreagenz (H), ausgewählt aus der Gruppe von Carbonsäuren, Carbonsäureanhydriden, halogenierten Kohlenwasserstoffen, Isocyanaten und Carbonaten zu mindestens einem polyethermodifizierten Polybutadien (K) enthaltend endverkappte Polyetherreste erfolgt; |
| im Schritt e) | optional die Farbaufhellung des mindestens einen polyethermodifizierten Polybutadiens (G) bzw. (K) mit Aktivkohle und/oder Wasserstoffperoxid vorgenommen wird. |

Durch das darin offenbarte Verfahren wird es erstmalig ermöglicht, lineare Polybutadiene durch eine einfache direkte Alkoxylierung an den seitständigen OH-Gruppen mit kammständigen Polyetherresten zu modifizieren. Die Kettenlänge und Monomerabfolge im Polyetherrest kann in weiten Bereichen variiert werden. Die mittlere Anzahl der ans Polybutadien gebundenen Polyetherreste ist gezielt über den Grad der Epoxidierung und die Hydroxylfunktionalisierung einstellbar und eröffnet eine große strukturelle Vielfalt bei den hydroxyfunktionellen Polybutadienen (E).

Die erfindungsgemäß erhältlichen Polybutadiene mit kammständigen Polyetherresten sind vorzugsweise im Wesentlichen frei von restlichen Epoxidgruppen. Das erfindungsgemäße Verfahrensprodukt enthält vorzugsweise im Wesentlichen keine freien Polyetheranteile. Vorzugsweise sind im Wesentlichen alle Polyether chemisch über eine Etherbindung an das Polybutadien angebunden. Damit unterscheiden sich die erfindungsgemäßen Verfahrensprodukte deutlich durch ihre erhöhte Reinheit von den bisher aus dem Stand der Technik bekannten Verbindungen.

Um eine Wiederholung der bevorzugten Ausgestaltungen des Herstellungsverfahrens der bisher unveröffentlichten europäischen Patentanmeldung EP 19212066.5 bzw. PCT/EP2020/083013 zu vermeiden, wird hiermit der Bezug der dezidierten Beschreibung zu den Überschriften der einzelnen Verfahrensschritte genommen:
**Zur bevorzugten Ausgestaltung von Schritt a) des erfindungsgemäßen Verfahrens**
**Zur bevorzugten Ausgestaltung von Schritt b) des erfindungsgemäßen Verfahrens**
**Zur bevorzugten Ausgestaltung von Schritt c) des erfindungsgemäßen Verfahrens DMC-Katalyse**
**Basische Katalyse**
**Produkte als Starter**
**Optionaler Schritt d)**
**Optionaler Schritt e)**
**Reaktoren**

Für die erfindungsgemäße Zusammensetzung wird vorzugsweise hier der Schritt c) zur Herstellung der besagten Verbindung detailliert beschrieben:
Im Schritt c) des erfindungsgemäßen Verfahrens erfolgt die Umsetzung des mindestens einen hydroxyfunktionellen Polybutadiens (E) mit mindestens einer epoxyfunktionellen Verbindung (F) zu mindestens einem polyethermodifizierten Polybutadien (G).

Das mindestens eine hydroxyfunktionelle Polybutadien (E) aus Schritt b) dient im Schritt c) als Startverbindung für die Umsetzung mit der mindestens einen epoxyfunktionellen Verbindung (F). Unter Ringöffnung und vorzugsweise in Gegenwart eines geeigneten Katalysators wird die mindestens eine epoxyfunktionelle Verbindung (F) (im Folgenden auch einfach als "Monomer" oder "Epoxidmonomer" oder "Epoxid" bezeichnet), in einer Polyadditionsreaktion an die OH-Gruppen des mindestens einen hydroxyfunktionellen Polybutadiens (E) addiert. Dies führt zur Bildung der erfindungsgemäßen Polybutadiene mit kammständigen (seitständigen) Polyetherketten, also zur Bildung des mindestens einen polyethermodifizierten Polybutadiens (G). Vorzugsweise ist das polyethermodifizierte Polybutadien (G) ein lineares Polybutadien, das kammständig (seitständig) mit Polyetherresten modifiziert ist. Es ist also bevorzugt, dass das polyethermodifizierte Polybutadien (G) ein lineares Polybutadien-Rückgrat und seitständige Polyetherreste aufweist.

Bei der Umsetzung im Schritt c) handelt es sich vorzugsweise um eine Alkoxylierungsreaktion, also um eine Polyaddition von Alkylenoxiden an das mindestens eine hydroxyfunktionelle Polybutadien (E). Die Umsetzung im Schritt c) kann aber alternativ oder zusätzlich zu den Alkylenoxiden auch mit Glycidylverbindungen durchgeführt werden.

Es ist daher bevorzugt, dass die mindestens eine im Schritt c) eingesetzte epoxyfunktionelle Verbindung aus der Gruppe der Alkylenoxide, bevorzugt aus der Gruppe der Alkylenoxide mit 2 bis 18 Kohlenstoffatomen, weiter bevorzugt aus der Gruppe der Alkylenoxide mit 2 bis 8 Kohlenstoffatomen, besonders bevorzugt aus der Gruppe bestehend aus Ethylenoxid, Propylenoxid, 1-Butylenoxid, cis-2-Butylenoxid, trans-2-Butylenoxid, Isobutylenoxid und Styroloxid ausgewählt ist; und/oder dass die mindestens eine im Schritt c) eingesetzte epoxyfunktionelle Verbindung aus der Gruppe der Glycidylverbindungen, bevorzugt aus der Gruppe der monofunktionellen Glycidylverbindungen, besonders bevorzugt aus der Gruppe bestehend aus Phenylglycidylether, o-Kresylglycidylether, tert-Butylphenylglycidylether, Allylglycidylether, Butylglycidylether, 2-Ethylhexylglycidylether, C12/C14-Fettalkoholglycidylether und C13/C15-Fettalkoholglycidylether ausgewählt ist.

Alternativ oder zusätzlich können zu den genannten Alkylenoxiden oder Glycidylverbindungen auch cyclische Anhydride, Lactone, Di-Lactide oder cyclische Carbonate als Monomere oder Comonomere mit den bereits genannten Alkylenoxiden oder Glycidylverbindungen eingesetzt werden.

Es können generell alle dem Fachmann bekannten cyclischen Anhydride, rein oder in beliebigen Mischungen, eingesetzt werden. Als gesättigte, ungesättigte oder aromatische cyclische Dicarbonsäureanhydride, können bevorzugt Bernsteinsäureanhydrid, Oct(en)yl-, Dec(en)yl- und Do-dec(en)ylbernsteinsäueanhydrid, Maleinsäureanhydrid, Itaconsäureanhydrid, Glutaranhydrid, Adipinanhydrid, Citraconanhydrid, Trimellitanhydrid, Phthalsäureanhydrid, Hexahydro-, Tetrahydro-, Dihydro-, Methylhexahydro- und Methyltetrahydrophthalsäureanhydrid. Besonders bevorzugt werden Bernsteinsäureanhydrid, Maleinsäureanhydrid, Phthalsäureanhydrid, und Hexahydrophthalsäureanhydrid eingesetzt, insbesondere Maleinsäureanhydrid und Phthalsäureanhydrid.

Als Lactone, können generell alle dem Fachmann bekannten Lactone, rein oder in beliebigen Mischungen, eingesetzt werden. Bevorzugt können Valerolactone, Caprolactone und Butyrolactone eingesetzt werden, die alle unsubstituiert oder mit organischen Resten versehen, bevorzugt Methylgruppen, substituiert sein können. Vorzugsweise können ε-Caprolacton oder δ-Valerolacton eingesetzt werden, insbesondere ε-Caprolacton.

Als cyclische Carbonate können generell alle dem Fachmann bekannten cyclischen Carbonate, zugänglich über die Insertion von CO2 in Epoxide, rein oder in beliebigen Mischungen eingesetzt werden. Bevorzugt kommen von Glycidethern abgeleitete Carbonate zum Einsatz, Besonders bevorzugt werden Propylencarbonat und Ethylencarbonat eingesetzt.

Die Monomere können wahlweise einzeln in reiner Form, abwechselnd hintereinander in beliebiger Dosierreihenfolge, aber auch gleichzeitig gemischt zugefügt werden. Die Sequenz der Monomereinheiten in der entstehenden Polyetherkette unterliegt damit einer blockweisen Verteilung oder einer statistischen Verteilung oder einer graduellen Verteilung im Endprodukt.

Durch das erfindungsgemäße Verfahren werden seitständige Polyetherketten am Polybutadien aufgebaut, die sich dadurch auszeichnen, dass sie hinsichtlich Strukturaufbau und Molmasse gezielt und reproduzierbar hergestellt werden können.

Die Abfolge der Monomereinheiten kann in weiten Grenzen durch die Reihenfolge der Zugabe variabel gestaltet werden.

Die Molmassen der seitständigen Polyetherreste können nach dem erfindungsgemäßen Verfahren in weiten Grenzen variiert und gezielt und reproduzierbar über das Molverhältnis der zugefügten Monomere in Bezug auf die OH-Gruppen des mindestens einen vorgelegten hydroxyfunktionellen Polybutadiens (E) aus Schritt b) gesteuert werden.

Die erfindungsgemäß hergestellten polyethermodifizierten Polybutadiene (G) sind vorzugsweise dadurch gekennzeichnet, dass sie gemäß den Formeln (3a), (3b) und (3c) über eine Ethergruppe an das Polybutadiengerüst gebundene Reste B enthalten,

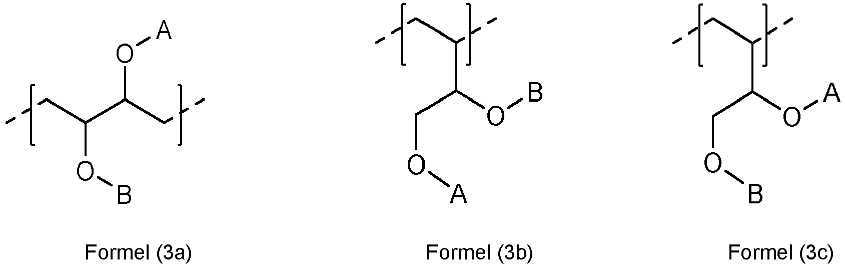

Wie oben zu Schritt b) ausgeführt wurde, stammt der Rest A in den Formeln (3a), (3b) und (3c) aus der Verbindung A-OH, also der im Schritt b) eingesetzten hydroxyfunktionellen Verbindung (D). Wie ebenfalls oben ausgeführt wurde, sind im Schritt b) zwei Fälle zu unterscheiden, nämlich A ≠ H oder A = H. Im ersten Fall, also für A ≠H, ist der Rest A in den Formeln (3a), (3b) und (3c) identisch mit dem Rest A in den Formeln (2a), (2b) und (2c). Im zweiten Fall, also für A = H, ist der Rest A in den Formeln (3a), (3b) und (3c) jeweils unabhängig voneinander H oder ein Rest B. Wird beispielsweise ein monofunktioneller, aliphatischer Alkohol mit 1 bis 6 Kohlenstoffatomen als hydroxyfunktionelle Verbindung (D) eingesetzt, so ist A ein Alkylrest mit 1 bis 6 Kohlenstoffatomen. Wird beispielsweise eine Carbonsäure als hydroxyfunktionelle Verbindung (D) eingesetzt, so ist A ein Acylrest. Wird jedoch Wasser als hydroxyfunktionelle Verbindung (D) eingesetzt, so ist A in den Formeln (3a), (3b) und (3c) im Falle der Umsetzung mit einer oder mehreren epoxyfunktionellen Verbindung (F) ein Rest B, im Falle der Nichtumsetzung bleibt A Wasserstoff. Es resultiert also aus jeder umgesetzten seitständigen Hydroxygruppe genau ein seitständiger Rest -O-B. Der Rest B ist wiederum aus einem oder mehreren Monomeren, vorzugsweise aus mehreren Monomeren, der mindestens einen eingesetzten epoxyfunktionellen Verbindung (F) aufgebaut.

Im Sinne der Erfindung können prinzipiell alle dem Fachmann bekannten Alkoxylierungskatalysatoren eingesetzt werden, z.B. basische Katalysatoren wie Alkalihydroxide, Alkalimetallalkoholate, Amine, Guanidine, Amidine, Phosphorverbindungen wie Triphenylphosphin, darüber hinaus saure und Lewis-saure Katalysatoren wie SnCl₄, SnCl₂, SnF₂, BF₃ und BF₃-Komplexe, sowie Doppelmetallcyanid (DMC)-Katalysatoren.

Vor der Epoxidzufuhr, also vor der Zugabe der mindestens einen eingesetzten epoxyfunktionellen Verbindung (F), wird der mit dem Starter und Katalysator teilweise befüllte Reaktor z.B. mit Stickstoff inertisiert. Dies geschieht beispielsweise durch mehrfaches abwechslungsweises Evakuieren und Zuführen von Stickstoff. Es ist vorteilhaft, den Reaktor nach dem letzten Aufdrücken von Stickstoff auf unter 200 mbar zu evakuieren. Die Addition der ersten Menge an Epoxidmonomer findet somit vorzugsweise in den evakuierten Reaktor statt. Die Dosage der Monomere erfolgt unter Rühren und ggf. Kühlen, um die freiwerdende Reaktionswärme abzuführen und die vorgewählte Reaktionstemperatur einzuhalten. Als Starter dient das mindestens eine hydroxyfunktionelle Polybutadien (E) oder es kann auch ein bereits entsprechend dem erfindungsgemäßen Verfahren hergestelltes polyethermodifiziertes Polybutadien (G) als Starter eingesetzt werden, wie weiter unten beschrieben wird.

Es ist möglich, weitere Additive in die erfindungsgemäße Zusammensetzung hinzuzufügen, wie etwa Polyether, Öle natürlichen und synthetischen Ursprungs, organische Polymere, organomodifizierte Silikonpolymere und Feststoffe. Beispiel eines solchen geeigneten feinteiligen Feststoffes ist hochdisperse, pyrolytisch oder nasschemisch gewonnene Kieselsäure, die als Aerosil oder Sipernat im Handel erhältlich ist und durch Behandlung mit Organosiliciumverbindungen hydrophobiert sein kann. Weitere geeignete Feststoffe sind Metallseifen wie Magnesium-, Aluminium- und Calciumseifen sowie Polyethylen- und Amidwachse oder Harnstoffe.

Vorzugsweise wird 2 bis100 Gew.-%, bevorzugt 5 - 70 Gew.-%, besonders bevorzugt 5 - 30 Gew.-% der Verbindung, bezogen auf die Gesamtzusammensetzung, eingesetzt.

Es ist ebenso vorstellbar, dass weitere Feststoffe, wie z. B. Kieselsäure, Wachse und Feststoffe hinzugefügt werden können, um die entschäumende Wirkung noch zu erhöhen. Dem Fachmann sind derartige Additive bekannt. Vorzugsweise können mindestens ein Feststoff eingesetzt werden, vorzugsweise ausgewählt aus der Gruppe bestehend aus Kieselsäuren, die modifiziert oder unmodifiziert vorliegen können bzw. der (Erd-) Alkalimetallseifen, wie beispielsweise Calciumstearat sowie deren Mischungen.

Auch der Zusatz von Emulgatoren zur Herstellung einer Entschäumeremulsion ausgehend von der erfindungsgemäßen Zusammensetzung ist vorzugsweise möglich. Hierbei können vorzugsweise handelsübliche Emulgatoren eingesetzt werden, bevorzugt anionischen, kationischen oder nicht ionische Emulgatoren bzw. Mischungen daraus. Bekannt sind auch spezifische Emulgatorsysteme, die auch eingesetzt werden können.

Vorzugsweise eignen sich Emulgatorsysteme mit einer Viskosität von 50 bis 5000 mPas, bevorzugt 100 bis 2000 mPas, besonders bevorzugt von 100 bis 1000 mPas, gemessen in einer 5%igen wässrigen Lösung nach DIN 53015, für die Herstellung einer erfindungsgemäßen Entschäumeremulsion.

Vorzugsweise weist die Zusammensetzung mindestens einen Verdicker auf, vorzugsweise ausgewählt aus der Gruppe bestehend aus Assoziativverdickern wie modifizierten Polyacrylaten, modifizierten Celluloseethern, modifizierten Polyacrylamiden, modifizierten Polyethern bzw. assoziativen Polyurethan-Verdickern, modifizierten Cellulosen, organischen Polymeren wie Polyvinylalkoholen, Polyacrylsäure und Polymethacrylsäuren, sowie deren Copolymeren, (modifizierten) Polyacrylamiden, Polyvinylpyrrolidon sowie Polyethylenglycolen, natürlichen Verdickungsmitteln wie Stärke, Gelatine, Casein oder Konjakwurzelmehl sowie deren chemisch modifizierten Typen und organischen Verdickern wie Metallseifen, gehärtetes Rizinusöl und dessen Alkoxylaten bzw. chemisch modifizierten Fettderivaten oder auch anorganischen Verbindungen wie Schichtsilikate (Bentonite, Hectorite) oder (hydratisierte) SiO2-Partikel, die auch modifiziert sein können.

Typische Vertreter der Acrylatverdicker, Typ ASE (alkali-swellable emulsion) sind von der Fa. Dow, z. B. unter der Marke ACRYSOL^{™} TT, von der Fa. Münzing, z. B. unter der Marke TAFIGEL^{®} AP und von der BASF , z. B. unter der Marke Rheovis^{®} AS-Typen der BASF erhältlich.

Bekannte anionisch modifizierte Acrylamide sind von der Fa. Solenis, Fa. Yixing Bluwat oder Fa. BASF.

Ein zusätzlicher Aspekt der Erfindung ist die Verwendung der Zusammensetzung als Entschäumeradditiv, als Verlaufadditiv und/oder als Substratnetzadditiv.

Ein weiterer Aspekt der Erfindung ist die Verwendung der Zusammensetzung zur Herstellung von Dispersionen, Mahlgütern, Farben, Lacken oder Drucktinten, Inkjets, Anreibeharzen, Pigmentkonzentraten, Farbpräparationen, Pigmentpräparationen, Füllstoffpräparationen oder Beschichtungszusammensetzungen.

Bei den Beschichtungszusammensetzungen können es sich um lösemittelhaltige, lösungsmittelfreie oder wasserbasierte Lacke oder Druckfarbe handelt.

Ein weiterer Gegenstand der Erfindung ist die Verwendung der Verbindungen auf Basis von Polybutadienen zur Herstellung einer Entschäumerzusammensetzung. Hinsichtlich der gezielten Auswahlbedingungen der Polyethermodifizierten Polybutadiene werden auf die o.g. Ausführung verwiesen.

Die folgenden Beispiele dienen dem Fachmann allein zur Erläuterung dieser Erfindung und stellen keinerlei Beschränkung des beanspruchten Gegenstands oder des beanspruchten Verfahrens dar.

### I. Herstellungsbeispiele

### Allgemeine Methoden

### Gel-Permeations-Chromatographie (GPC):

GPC-Messungen zur Bestimmung der Polydispersität (M_{w}/Mₙ), der gewichtsmittleren Molmasse (M_{w}) und der zahlenmittleren Molmasse (Mₙ) wurden unter den folgenden Messbedingungen durchgeführt: Säulenkombination SDV 1000/10000 Å (Länge 65 cm), Temperatur 30 °C, THF als mobile Phase, Fließrate 1 ml/min, Probenkonzentration 10 g/l, RI-Detektor, Auswertung gegen Polypropylenglykol-Standard.

### Bestimmung des Gehalts an Epoxidgruppen im Polybutadien (Epoxidgehalt, Epoxidierungsgrad):

Die Bestimmung des Gehalts an Epoxidgruppen erfolgte mit Hilfe der ¹³C-NMR-Spektroskopie. Verwendet wurde ein NMR-Spektrometer vom Typ Bruker Avance 400. Die Proben wurden dazu in Deuterochloroform gelöst. Der Epoxidgehalt ist definiert als der Anteil an epoxidierten Butadieneinheiten in mol-% bezogen auf die Gesamtheit aller in der Probe enthaltenen Wiederholungseinheiten. Dies entspricht der Anzahl der Epoxidgruppen des epoxidierten Polybutadiens dividiert durch die Anzahl der Doppelbindungen des eingesetzten Polybutadiens.

### Bestimmung der Säurezahl:

Die Säurezahlbestimmung wurde nach einem Titrationsverfahren in Anlehnung an die DIN EN ISO 2114 durchgeführt.

### Herstellung der erfindungsgemäßen Entschäumerzusammensetzung

Angelehnt an die noch unveröffentlichte europäische Patentanmeldung EP 19212066.5 bzw. PCT/EP2020/083013 1.1, wurden die Schritte a) - c) durchgeführt. Exemplarisch wird jeweils das erste Beispiel bzgl. der Einwaage der Komponente beschrieben. Die eingesetzten Einwaagen und Parameter der Zwichenprodukte und Entprodukte sind den jeweiligen Tabellen zu entnehmen.

### Schritt a) Herstellung epoxidierter Polybutadiene

Zur Herstellung eines epoxidierten Polybutadiens wurde ein Polybutadien der Marke Polyvest^{®} 110 (Fa. Evonik) mit der Struktur x=1 %, y=24% und z=75% eingesetzt.

### Exemplarisch für Beispiel A1:

Es wurde in einem 2L-Vielhalsglaskolben unter einer Stickstoffatmosphäre 725 g Polyvest^{®} 110 und 39,2 g konz. Ameisensäure in 1500 g Chloroform bei Raumtemperatur vorgelegt. Anschließend wurden 145 g 30%-ige HzOz-Lösung (30 Gew.-% H₂O₂ bezogen auf die Gesamtmasse der wässrigen Lösung) langsam zugetropft und die Lösung dann für 10 Stunden auf 50 °C erhitzt. Nach Ende der Reaktion wurde auf Raumtemperatur abgekühlt, die organische Phase abgetrennt und diese noch viermal mit dest. H₂O gewaschen. Überschüssiges Chloroform und restliches Wasser wurden abdestilliert. Es wurden 689 g des Produktes erhalten, welches mit 1000 ppm Irganox^{®} 1135 versetzt und unter Stickstoff gelagert wurde.

Die Auswertung mittels ¹³C-NMR ergab einen Epoxidierungsgrad von ca. 8,8% der Doppelbindungen.
M_{w}=4596 g/mol; Mₙ=1972 g/mol ; M_{w}/Mₙ = 2,3

Für die anderen Beispiele sind die Einwaage, Reaktionsbedingungen und Auswertungen der Tabelle 1 zu entnehmen. Zur besseren Lesart wurde die Bezeichnung der Beispiele A1 - A3 auch für Tabelle 2 beibehalten.

**Tabelle 1: Epoxidiertes Polybutadien**

| | | **Polybutadien [g]** | **konz. Ameisensäure [g]** | **CHCl₃ g][** | **30% H₂O₂**-**Lsg. [g]** | **t [h]** | **Mₙ [g/mol]** | **M_{w} [g/mol]** | **M_{w}/Mₙ** | **Epoxidierungsgrad [%]** | **Ausbeute [g]** |
|---|---|---|---|---|---|---|---|---|---|---|---|
| HR 6009 | A1 | 725 g | 39,2 | 1500 | 145 | 10 | 1972 | 4596 | 2,3 | 8,8 | 689 |
| DZ 2645 | A2 | 750 g | 40,5 | 750 | 150 | 10,5 | 2018 | 4686 | 2,3 | 7,9 | 727 |
| DZ 2647 | A3 | 750 g | 40,5 | 750 | 150 | 10 | 1978 | 4583 | 2,3 | 8,5 | 713 |

### Schritt b) Herstellung hydroxyfunktioneller Polybutadiene

Zur Herstellung eines hydroxylierten Polybutadiens wurde das epoxidierte Polybutadien A1 aus Schritt a) eingesetzt. Der Hydroxylierungsgrad ist dabei die Anzahl der OH-Gruppen des hydroxyfunktionellen Polybutadiens dividiert durch die Anzahl der Doppelbindungen des in Schritt a) eingesetzten Polybutadiens. Zur Herstellung wurden in einem 2 L-Vierhalskolben unter einer Stickstoffatmosphäre 684 g des epoxidierten Polybutadiens in 684 g iso-Butanol vorgelegt und unter Rühren mit 80wppm Trifluormethansulfonsäure (bezogen auf Masse epoxidiertes Polybutadien). Anschließend wurde auf 70 °C erhitzt und das Gemisch für 3 Stunden bei dieser Temperatur gerührt. Während der Reaktion klart das Reaktionsgemisch auf. Nach beendeter Reaktion wurde auf Raumtempertaur abgekühlt und die Lösung durch Zugabe von 10,4 g ges. NaHCO₃-Lsg. neutralisiert. Es wurde auf 115 °C erhitzt und überschüssiges Wasser sowie der überschüssige Alkohol wurden i.Vak. abdestilliert. Der durch Destillation zurück gewonnene und ggf. getrocknete Alkohol kann bei Folgesynthesen wieder eingesetzt werden. Die Trocknung des abdest. iso-Butanols kann z.B. destillativ oder durch Zusatz von Trocknungsmitteln wie z.B. Molsieben geschehen. Es wurden 724 g eines bräunlichen Produkts erhalten, welches mit 1000 ppm Irganox^{®} 1135 versetzt und unter Stickstoff gelagert wurde.

Die Auswertung mittels ¹³C-NMR ergab einen vollständigen Umsatz aller Epoxidgruppen woraus sich ein Hydroxylierungsgrad von ca. 8,8% ergibt.
M_{w}=9257 g/mol ; Mₙ=2469 g/mol ; M_{w}/Mₙ= 3,7

Analog wurde der Schritt auch für die anderen Beispiele durchgeführt, siehe Tabelle 2.

**Tabelle 2: hydroxyfunktionelles Polybutadien**

| | **Epoxidiertes Polybutadien [g] aus Tabelle 1** | **iso-Butanol [g]** | **ges. NaHCO₃**-**Lsg. [g]** | **t [h]** | **Mₙ [g/mol]** | **M_{w} [g/mol]** | **M_{w}/Mₙ** | **Hydoxylierungsgrad [%]** | **Ausbeute [g]** |
|---|---|---|---|---|---|---|---|---|---|
| **A1** | 684 | 684 | 10,4 | 3 | 2469 | 9257 | 3,7 | 8,8 | 724 |
| **A2** | 647 | 647 | 9,9 | 5 | 2534 | 10.860 | 4,3 | 7,9 | 687 |
| **A3** | 675) | 675 | 10,3 | 5 | 2267 | 6722 | 3,0 | 8,5 | 703 |

### Schritt c) Herstellung des erfindungsgemäßen Entschäumers mittels Alkoxylierung des hydroxyfunktionellen Polybutadiens

In einem 3 Liter Autoklaven wurden 196,0 g des hydroxyfunktionellen Polybutadiens A1 aus Schritt b) und 11,1 g 30%-ige Natriummethanolat-Lösung (30 Gew.-% Natriummethanolat in Methanol bezogen auf Gesamtmasse der Lösung) unter Stickstoff vorgelegt und 1 h bei 50 °C gerührt. Anschließend wurde unter Rühren auf 115 °C aufgeheizt und der Reaktor bis auf einen Innendruck von 30 mbar evakuiert, um überschüssiges Methanol und andere vorhandene flüchtige Inhaltsstoffe destillativ zu entfernen. Es wurden 540 g Propylenoxid (PO) kontinuierlich und unter Kühlen in 15 h bei 115 °C und max. 3,5 bar Reaktorinnendruck (absolut) zudosiert. An die 30 minütige Nachreaktion bei 115 °C schloss sich die Entgasung an. Flüchtige Anteile wie restliches Propylenoxid wurden im Vakuum abdestilliert. Das Produkt wurde auf 95 °C abgekühlt, mit 30%-iger H₃PO₄ auf eine Säurezahl von 0,1 mg KOH/g neutralisiert und mit 1000 ppm Irganox^{®} 1135 versetzt. Wasser wurde in einer Vakuumdestillation entfernt und ausgefallene Salze abfiltriert. Es wurden 706 g des mittelviskosen und orange-farbenen, klaren alkoxylierten Polybutadiens isoliert und unter Stickstoff gelagert.

Bei Neutralisation mit Milchsäure wurde das Produkt im Anschluss an die Vakuumdestillation zur Entfernung flüchtiger Anteile auf unter 80 °C gekühlt, mit Milchsäure auf eine Säurezahl von 0,1 mg KOH/g neutralisiert, mit 1000 ppm Irganox^{®} 1135 versetzt und unter Stickstoff gelagert.
M_{w}=22.850 g/mol; Mₙ=3160 g/mol ; M_{w}/Mₙ= 7,2

Analog wurden weitere erfindungsgemäße Entschäumer und Vergleichsbeispiel gemäß Tabelle 3 mit den aufgeführten Einwaagen und Reaktionsbedingungen durchgeführt. Die Alkoxylierungsmodifikationen sind aus der Spalte "Dosageprofil" ersichtlich.

**Tabelle 3: erfindungsgemäßer Entschäumer und Vergleichsbeispiel**

| **Ertschäu mer** | **Hyroxylierte s Polybutadie n [g] aus Tabelle 2** | **Dosageprofil** | **t [h]** | **Kat. [g]** | **Neutralisation** | **Mₙ [g/mol]** | **M_{w} [g/mol** ] | **M_{w}/Mₙ** | **SZ [mg KOH/g]** | **Ausbeute [g]** | **Aggregat-zustand** |
|---|---|---|---|---|---|---|---|---|---|---|---|
| **EA1.1** | 196 des A1 | 540 g PO | 15 | 11,1 | H₃PO₄ | 3160 | 22.850 | 7,2 | 0,1 | 706 | flüssig |
| **EA1.2** | 222 des A1 | 368 g PO | 26 | 6,3 | Milchsäure | 3101 | 17.415 | 5,6 | 0,1 | 566,4 | flüssig |
| **EA2** | 172 de A2 | 474 g PO + 72 g EO | 13 | 10,0 | H₃PO₄ | 3202 | 25.240 | 2,9 | 0,1 | 671 | flüssig |
| **EA3** | 149 des A3 | 284 g EO / 161 g PO | 14 | 11,0 | H₃PO₄ | 3251 | 24.034 | 7,4 | 0,1 | 565 | flüssig |
| **VGA2** | 211 des A2 | 441 g EO | 5 | 6,0 | H₃PO₄ | 3943 | 15.406 | 3,9 | 0,1 | 554 | fest |

### II. Überprüfung der Verträglichkeit und Entschäumerwirkung

### Methoden

### Viskosität (mPas)

Die Druckviskosität von 16 Sekunden (DIN 4 Becher) wird bei 23°C gemäß DIN EN ISO 2431 eingestellt.

### Verträglichkeit

Die Verträglichkeit wird visuell an Hand eines Aufzuges der zu testenden Formulierung (appliziert mittels eines Spiralrakels (K-Stab Nummer 2 der Firma Erichsen) auf eine Folie (Melinex 401 CW, Firma Pütz Folien) ermittelt.

Die Beurteilung erfolgt nach folgender Skala (Bezogen auf eine Fläche von 10 x 10 cm):
1 = Oberfläche komplett mit Defekten
2 = Oberfläche fast komplett mit Defekten
3 = Oberfläche mit sehr vielen Defekten
4 = Oberfläche zahlreichen Defekten
5 = Oberfläche mit Einzeldefekten (bis 50)
6 = Oberfläche mit Einzeldefekten (bis 30)
7 = Oberfläche mit wenigen Einzeldefekten (bis 20)
8 = Oberfläche mit wenigen Einzeldefekten (bis 10)
9 = Oberfläche mit sehr wenigen Einzeldefekten (1 bis 5)
10 = Oberfläche frei von Defekten

### Entschäumerwirkung

Die Entschäumerwirkung wird mittels eines Rührtests ermittelt. Dafür werden 50g der Formulierung und die Testmenge des Entschäumers (z.B. 0,2 g) in einen Kunststoffbecher gewogen. Der Entschäumer wird mittels eines Rührers (Dispermat Typ 60/2-457 der Firma VMA Getzmann GmbH) mit einer gezahnten Dissolverscheibe (Durchmesser 3cm, der Firma VMA Getzmann GmbH) für eine Minute bei 1500 Umdrehungen pro Minute eingearbeitet. Anschließend wird die Formulierung für 2 Minuten bei 5000 Umdrehungen pro Minute aufgeschäumt. Dann werden 45g der Formulierung in einen 100ml graduierten Glasmeßzylinder eingewogen und das Volumen abgelesen. Dabei bedeutet ein höheres Volumen eine schlechte Entschäumerwirkung.

### Applikation

Die jeweiligen Beschichtungszusammensetzungen werden mit einem Spiralrakel (K-Stab Nummer 2 der Firma Erichsen) auf eine Folie (Melinex 401 CW, Firma Pütz Folien)) appliziert. Die Trocknung erfolgt bei Raumtemperatur.

### Weitere Bedingungen

Werden im Rahmen der vorliegenden Erfindung %-Angaben gemacht, so handelt es sich, wenn nicht anderes angegeben, um Angaben in Gewichts-%. Bei Zusammensetzungen beziehen sich die %-Angaben, wenn nicht anderes angegeben, auf die Gesamtzusammensetzung. Werden nachfolgend Mittelwerte angegeben, so handelt es sich, wenn nicht anderes angegeben, um Zahlenmittel. Werden nachfolgend Messwerte angegeben, so wurden diese Messwerte, wenn nicht anderes angegeben, bei einem Druck von 101325 Pa, einer Temperatur von 23 °C und der umgebenden relativen Luftfeuchtigkeit von ca. 40 % ermittelt.

### Materialien und Geräte

Dispermat Typ 60/2-457, Firma VMA Getzmann GmbH
Dissolverscheibe (Durchmesser 3 cm), Firma VMA Getzmann GmbH)
Spiralrakels (K-Stab Nummer 2), Firma Erichsen
Folie (Melinex 401 CW), Firma Pütz Folien
K100 Messgerät für statische Oberflächen Spannung, Firma Krüss
BP 50 Messgerät für dynamische Oberflächen Spannung, Firma Krüss
Speedmixer DAC 150 FVZ, Firma Hauschild GmbH & Co. KG

### Vergleichsbeispiele

Blank Flexofarbe K1 Nullreferenz, Herstellung siehe unten
Polyvest 130 Polybutadien, Fa. Evonik

### Herstellung der Flexofarbe

Für die Prüfung der Verträglichkeit und Entschäumerwirkung wurde zunächst eine Flexofarbe K1, welches als Nullreferenz eingesetzt wird, hergestellt. Hierbei wird das angesetzte Mahlgut mit dem Auflackgut vermischt und mithilfe eines Dissolvers homogenisiert. Durch Zugabe von destilliertem Wasser wird die Nullreferenz auf eine Druckviskosität von 16 Sekunden (DIN 4 Becher bei 23°C DIN EN ISO 2431) eingestellt.

Für die Herstellung des Mahlgutes der Flexofarbe K1 wurde das flüssige Bindemittel gemäß Tabelle 4 in einem Mahltopf vorgelegt. Die weiteren flüssigen Komponenten wurden für 5 Minuten bei 2,6 m/s (400 U/Min) mit einer Sö12,5cm Dissolverscheibe eingearbeitet und homogenisiert, anschließend das Pigment dazugegeben. Die Mischung wurde dann bei 18 - 23 m/s (3520 U/Min) mit einer Sö von 12,5 cm Dissolverscheibe für 10 Minuten bei max. 50°C vordispergiert. Nach der Vordispergierung wurde zum Schluss ein letzter Teil des flüssigen Bindemittels eingewogen, welches für 5 Min bei 1800U/Min eingearbeitet wurde. Mittels einer Sö13cm Doppelmahlscheibe und Glasperlen mit einem Durchmesser von 2,5 mm wurde die Mischung bei 10m/s (1470 U/Min) bis zu einer Kornfeinheit von < 10µm dispergiert. Die Überprüfung der Kornfeinheit wurde mithilfe eines Grindometers nach DIN EN ISO 1524 geprüft. Destilliertes Wasser wurde nach Erreichung der Kornfeinheit hinzugewogen und homogenisiert. Anschließend erfolgte das Absieben mit einem Metallsieb.

**Tabelle 4 Rezeptur Mahlgut Flexofarbe K1**

| **Bezeichnung** | **Hersteller** | **Typ** | **Gewichtsteile** |
|---|---|---|---|
| Joncryl^{®} HPD 96E | BASF | Bindemittel | 21,15 |
| TEGO^{®} Foamex 830 | Evonik | Entschäumer | 0,47 |
| TEGO^{®} Dispers 760W | Evonik | Netz & Dispergieradditiv | 2 |
| Wasser | | Lösemittel | 14,72 |
| Irgalite Yellow K 1415 | BASF | Pigment | 35,04 |
| Joncryl^{®} HPD 96E | BASF | Bindemittel | 11,19 |
| Dest. Wasser | | Lösemittel | 15,43 |
| | | **Summe** | **100** |

**Tabelle 5: Rezeptur Auflackgut**

| **Bezeichnung** | **Hersteller** | **Typ** | **Gewichtsteile** |
|---|---|---|---|
| Mahlgut Flexofarbe K1 | | Mahlgut | 42,1 |
| Joncryl^{®} 90 | BASF | Bindemittel | 21,1 |
| Joncryl^{®} 77-E | BASF | Bindemittel | 36,8 |
| Dest. Wasser | | Lösemittel | Zum Einstellen der Viskosität |
| | | Summe | 100 |

Entsprechend Tabelle 2 wurde das Mahlgut vorgelegt und die weiteren Bindemittel des Auflackguts nacheinander bei einer Umdrehung von 1500 U/Min für 20 Min mit einer 010cm Dissolverscheibe am Dissolver zugegeben und homogenisiert.

Nach der Homogenisierung erfolgte die Zugabe von destilliertem Wasser zur Viskositätseinstellung. Die Druckviskosität wurde auf 16sek im DIN 4 Becher, bei 23°C mithilfe der DIN EN ISO 2431 eingestellt.

Die Flexofarbe K1 wurde zur weiteren Prüfung eingesetzt.

### Herstellung der erfindungsgemäßen Entschäumeremulsion

Für die anwendungstechnische Prüfung wurden die 80,0 Gew.-% des erfindungsgemäßen Entschäumers EA1.1, EA1.2, EA2, EA3, Vergleichsbeispiele VGA2 und Polyvest^{®}130 unter Verwendung von nichtionogenen Emulgatoren (Mischung aus Polyoxyethylenfettalkoholether und Polyoxyethylentriglycerid mit einem Mischungs-HLB von 13) in eine 20 %ige wässrige Entschäumeremulsion überführt.

Zu der erfindungsgemäßen Entschäumeremulsion wurde jeweils ein Verdicker hinzugefügt, so dass die Verdickerkonzentration in der Entschäumeremulsion für
**System 1:** 0,8 Gew.-% eines handelsüblichen Acrylatverdickers Typ ASE (alkali-swellable emulsion), beispielsweise von der Fa. Dow, ACRYSOL^{™} ASE-60,
**System 2:** 0,25 Gew.-% eines anionisch modifizierten Acrylamid der Fa. BASF, Magnafloc beträgt.

### Verträglichkeitsprüfung

50g der Flexofarbe K1 und 0,2 g der entsprechenden Entschäumeremulsion 1 (mit System 1) oder 2 (mit System 2) in einen Kunststoffbecher gewogen und wie oben beschrieben aufgeschäumt. Der Schaumzusammenbruch wurde für 90 Minuten beobachtet und danach wie oben beschrieben auf einer Folie appliziert und visuell ausgewertet.

### Entschäumerwirkung

50g der Flexofarbe K1 und 0,2 g der entsprechenden Entschäumeremulsion 1 oder 2 in einen Kunststoffbecher gewogen und wie oben beschrieben aufgeschäumt. Entsprechend wurde die Entschäumerwirkung geprüft.

Die Ergebnisse sind in den nachfolgenden Tabellen aufgeführt.

**Tabelle 6: Entschäumeremulsion System 1**

| **Beispiele** | **Chemische Modifikation** | **Schaumvolumen** | **Verträglichkeit** |
|---|---|---|---|
| | EO/PO (Masse) | [mL/45g] | |
| **Blank Flexofarbe K1** | | 90 | 10 |
| **Polyvest 130** | | 81 | 9 |
| **EA1.1** | 0 / 540g | 70 | 9 |
| **EA1.2** | 0 / 368g | 69 | 9 |
| **EA2** | 72g / 474g | 80 | 9 |
| **VGA2** | 441g / 0 | 89 | 9 |

Die erfindungsgemäßen Entschäumeremulsionen zeigten eine bessere Entschäumerwirkung auf als die der Vergleichsbeispiele.

**Tabelle 7: Entschäumeremulsion System 2**

| **Beispiele** | **Chemische Modifikation** | **Schumvolumen** | **Verträglichkeit** |
|---|---|---|---|
| | EO/PO (Masse) | [mL/45g] | |
| Blank Flexofarbe K1 | | 90 | 10 |
| Polyvest 130 | | 86 | 9 |
| EA2 | 72g / 474g | 80 | 10 |
| EA3 | 284g / 161g | 86 | 10 |
| EA1.1 | 0 / 540g | 68 | 10 |

Hier sind die erfindungsgemäßen Entschäumeremulsionen sowohl in ihrer Entschäumerwirkung als auch in der Verträglichkeit gegenüber dem Vergleichsbeispiel weit überlegen.

## Patentansprüche

1. Entschäumerzusammensetzung enthaltend eine Verbindung auf Basis von Polybutadien mit mindestens einer Wiederholungseinheit ausgewählt aus der Gruppe bestehend aus den zweibindigen Resten 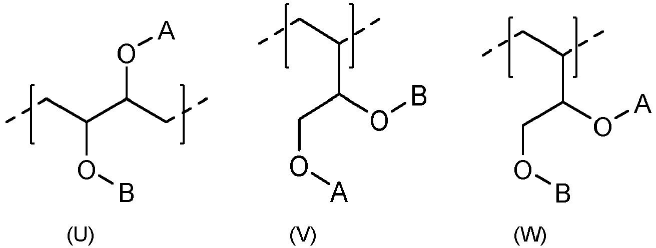 wobei
A jeweils unabhängig voneinander ein einbindiger organischer Rest oder ein Wasserstoffrest ist,
bevorzugt jeweils unabhängig voneinander ausgewählt ist aus der Gruppe bestehend aus einbindigen Kohlenwasserstoffresten mit 1 bis 6 Kohlenstoffatomen,
besonders bevorzugt jeweils unabhängig voneinander ausgewählt ist aus der Gruppe bestehend aus Alkylresten mit 1 bis 4 Kohlenstoffatomen;
B jeweils unabhängig voneinander ausgewählt ist aus der Gruppe bestehend aus Resten der Formel (4a), 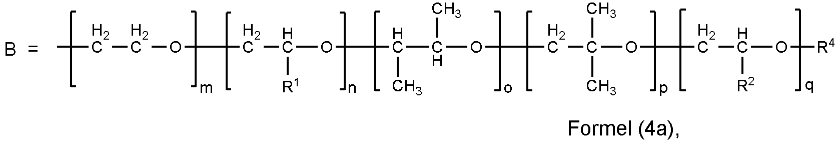 bevorzugt jeweils unabhängig voneinander ausgewählt ist aus der Gruppe bestehend aus Resten der Formel (4b), 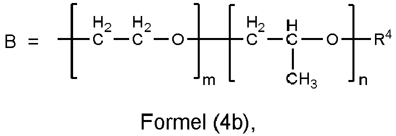 besonders bevorzugt jeweils unabhängig voneinander ausgewählt ist aus der Gruppe bestehend aus Resten der Formel (4c), 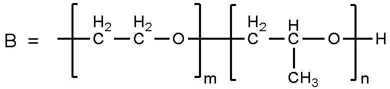 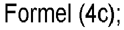
R¹ jeweils unabhängig voneinander ausgewählt ist aus der Gruppe bestehend aus einbindigen Kohlenwasserstoffresten mit 1 bis 16 Kohlenstoffatomen,
bevorzugt jeweils unabhängig voneinander ein Alkylrest mit 1 bis 16 Kohlenstoffatomen oder ein Phenylrest ist,
besonders bevorzugt jeweils unabhängig voneinander ein Methylrest, ein Ethylrest oder ein Phenylrest ist;
R² ein Rest der Formel -CH₂-O-R³ ist;
R³ jeweils unabhängig voneinander ausgewählt ist aus der Gruppe bestehend aus einbindigen Kohlenwasserstoffresten mit 3 bis 18 Kohlenstoffatomen;
bevorzugt jeweils unabhängig voneinander ein Allylrest, ein Butylrest, ein Alkylrest mit 8 bis 15 Kohlenstoffatomen oder ein Phenylrest, der mit einbindigen Resten ausgewählt aus Kohlenwasserstoffresten mit 1 bis 4 Kohlenstoffatomen substituiert sein kann, ist; besonders bevorzugt ein tert-Butylphenylrest oder ein o-Kresylrest ist;
R⁴ jeweils unabhängig voneinander ein einbindiger organischer Rest mit 1 bis 18 Kohlenstoffatomen oder Wasserstoff, bevorzugt Wasserstoff ist;
und m, n, o, p und q jeweils unabhängig voneinander 0 bis 300, bevorzugt 0 bis 200, besonders bevorzugt 0 bis 100 betragen, mit der Maßgabe, dass die Summe aus m, n, o, p und q größer als 1, bevorzugt größer als 5, besonders bevorzugt größer als 10 ist; dass Rest B mindestens eine Wiederholungseinheit gemäß 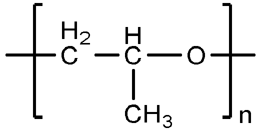
aufweist;
und jede Permutation der Wiederholungseinheiten im Rest B mitumfasst ist.

2. Zusammensetzung nach Anspruch 1, **dadurch gekennzeichnet, dass** m, n, o, p und q jeweils unabhängig voneinander 0 bis 300, bevorzugt 0 bis 200, besonders bevorzugt 0 bis 100 betragen, mit der Maßgabe, dass die Summe aus m, n, o, p und q größer als 1, bevorzugt größer als 5, besonders bevorzugt größer als 10 ist.

3. Zusammensetzung nach einem der vorgenannten Ansprüche, **dadurch gekennzeichnet, dass** die zahlenmittlere Molmasse Mₙ des Polybutadienteils, bestimmt nach der in der Beschreibung angegebenen Methode, von 200 g/mol bis 20000 g/mol, bevorzugt von 500 g/mol bis 10000 g/mol, besonders bevorzugt von 700 g/mol bis 5000 g/mol beträgt.

4. Zusammensetzung nach einem der vorgenannten Ansprüche, **dadurch gekennzeichnet, dass** der Polybutadienteil 0 % bis 80 %, bevorzugt 0 % bis 30 %, besonders bevorzugt 0 % bis 10 %, ganz besonders bevorzugt 0 % bis 5 % der enthaltenen Doppelbindungen 1,2-Vinyl-Doppelbindungen aufweist und 20 % bis 100 %, bevorzugt 70 % bis 100 %, besonders bevorzugt 90 % bis 100 %, ganz besonders bevorzugt 95 % bis 100 % der enthaltenden Doppelbindungen 1,4-Doppelbindungen.

5. Zusammensetzung nach einem der vorgenannten Ansprüche, **dadurch gekennzeichnet, dass** die Verbindung auf Basis von linearen Polybutadienen hergestellt wurde.

6. Zusammensetzung nach einem der vorgenannten Ansprüche, **dadurch gekennzeichnet, dass** die Verbindung keinen (kammständigen) Polybutadiene aufweist.

7. Zusammensetzung nach einem der vorgenannten Ansprüche, **dadurch gekennzeichnet, dass** die Verbindung ausschließlich seitständige (kammständige) Wiederholungseinheiten (U), (V) und/oder (W) aufweist.

8. Zusammensetzung nach einem der vorgenannten Ansprüche, **dadurch gekennzeichnet, dass** die mittlere Molmasse des Rests B, bestimmt nach der in der Beschreibung angegebenen Methode, von 40 g/mol bis 20000 g/mol, bevorzugt von 100 g/mol bis 15000 g/mol, besonders bevorzugt von 200 g/mol bis 10000 g/mol beträgt.

9. Zusammensetzung nach einem der vorgenannten Ansprüche, **dadurch gekennzeichnet, dass** 2 bis100 Gew.-%, bevorzugt 5 - 70 Gew.-%, besonders bevorzugt 5 - 30 Gew.-% der Verbindung, bezogen auf die Gesamtzusammensetzung, eingesetzt wird.

10. Zusammensetzung nach einem der vorgenannten Ansprüche, **dadurch gekennzeichnet, dass** sie mindestens ein Emulgator aufweist, vorzugsweise ausgewählt aus der Gruppe der anionischen, kationischen oder nicht-ionischen Emulgatoren bzw. Mischungen daraus.

11. Zusammensetzung nach einem der vorgenannten Ansprüche, **dadurch gekennzeichnet, dass** sie eine Viskosität, gemessen in einer 5 Gew.-%igen wässrigen Lösung bei 20°C nach DIN 53015, von 50 - 5000 mPa s, bevorzugt 100 - 2000 mPa s und besonders bevorzugt 100 - 1000 mPa s aufweist.

12. Zusammensetzung nach einem der vorgenannten Ansprüche, **dadurch gekennzeichnet, dass** sie mindestens ein Verdicker aufweist, vorzugsweise ausgewählt aus der Gruppe bestehend aus Assoziativverdickern wie hydrophob modifizierte Polyacrylaten (HASE), hydrophob modifizierte Celluloseether (HMHEC), hydrophob modifizierte Polyacrylamide (HMPAM), hydrophob modifizierte Polyether (HMPE) bzw. assoziativen Polyurethan-Verdickern, modifizierten Cellulosen, organischen Polymeren wie Polyvinylalkoholen, Polyacrylsäure und Polymethacrylsäuren, Polyacrylamiden, Polyvinylpyrrolidon sowie Polyethylenglycolen, natürlichen Verdickungsmitteln wie Stärke, Gelatine, Casein oder Konjakwurzelmehl sowie deren chemisch modifizierten Typen und organischen Verdickern wie Metallseifen, gehärtetes Rizinusöl und dessen Alkoxylaten bzw. chemisch modifizierten Fettderivaten oder auch anorganischen Verbindungen wie Schichtsilikate (Bentonite, Hectorite) oder (hydratisierte) SiO2-Partikel, die auch modifiziert sein können.

13. Zusammensetzung nach einem der vorgenannten Ansprüche, **dadurch gekennzeichnet, dass** sie mindestens ein Feststoff aufweist, vorzugsweise ausgewählt aus der Gruppe bestehend aus Kieselsäuren, die modifiziert oder unmodifiziert vorliegen können bzw. der (Erd-) Alkalimetallseifen, wie beispielsweise Calciumstearat, oder weiteren sowie deren Mischungen.

14. Verwendung der Zusammensetzung nach einem der vorgenannten Ansprüche als Entschäumeradditiv, als Verlaufadditiv und/oder als Substratnetzadditiv.

15. Verwendung der Zusammensetzung nach einem der vorgenannten Ansprüche zur Herstellung von Dispersionen, Mahlgütern, Farben, Lacken oder Drucktinten, Inkjets, Anreibeharzen, Pigmentkonzentraten, Farbpräparationen, Pigmentpräparationen, Füllstoffpräparationen oder Beschichtungszusammensetzungen.

16. Verwendung einer Verbindung auf Basis von Polybutadienen nach einem der vorgenannten Ansprüche 1 - 8 zur Herstellung einer Entschäumerzusammensetzung.

## Claims

1. Defoamer composition comprising a compound based on polybutadiene having at least one repeat unit selected from the group consisting of the divalent radicals 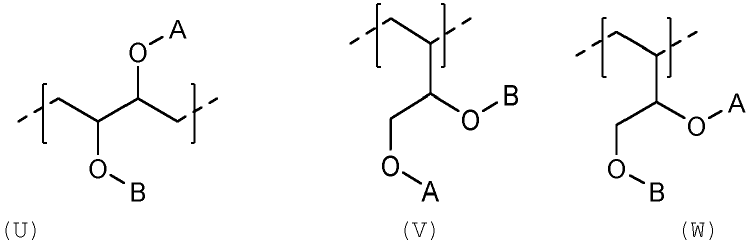 wherein
A is in each case independently a monovalent organic radical or a hydrogen radical,
preferably in each case independently selected from the group consisting of monovalent hydrocarbon radicals having 1 to 6 carbon atoms,
more preferably in each case independently selected from the group consisting of alkyl radicals having 1 to 4 carbon atoms;
B is in each case independently selected from the group consisting of radicals of the formula (4a) 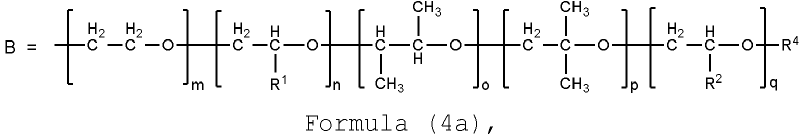 preferably in each case independently selected from the group consisting of radicals of the formula (4b) 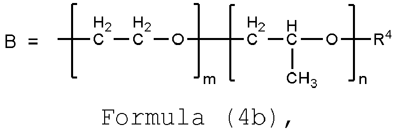 more preferably in each case independently selected from the group consisting of radicals of the formula (4c) 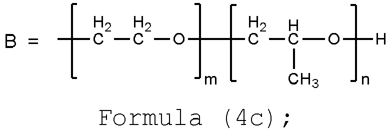
R¹ is in each case independently selected from the group consisting of monovalent hydrocarbon radicals having 1 to 16 carbon atoms,
preferably in each case independently an alkyl radical having 1 to 16 carbon atoms or a phenyl radical,
more preferably in each case independently a methyl radical, an ethyl radical or a phenyl radical;
R² is a radical of the formula -CH₂-O-R³;
R³ is in each case independently selected from the group consisting of monovalent hydrocarbon radicals having 3 to 18 carbon atoms;
preferably each independently an allyl radical, a butyl radical, an alkyl radical having 8 to 15 carbon atoms or a phenyl radical that may be substituted by monovalent radicals selected from hydrocarbon radicals having 1 to 4 carbon atoms; more preferably a tert-butylphenyl radical or an o-cresyl radical;
R⁴ is each independently a monovalent organic radical having 1 to 18 carbon atoms or hydrogen, preferably hydrogen;
and
m, n, o, p and q are each independently 0 to 300, preferably 0 to 200, more preferably 0 to 100, with the proviso that the sum total of m, n, o, p and q is greater than 1, preferably greater than 5, more preferably greater than 10;
the B radical has at least one repeat unit in accordance with 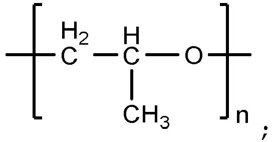 including every permutation of the repeat units in the B radical.

2. Composition according to Claim 1, **characterized in that** m, n, o, p and q are each independently 0 to 300, preferably 0 to 200, more preferably 0 to 100, with the proviso that the sum total of m, n, o, p and q is greater than 1, preferably greater than 5, more preferably greater than 10.

3. Composition according to either of the preceding claims, **characterized in that** the number-average molar mass Mₙ of the polybutadiene moiety, determined by the method specified in the description, is from 200 g/mol to 20 000 g/mol, preferably from 500 g/mol to 10 000 g/mol, more preferably from 700 g/mol to 5000 g/mol.

4. Composition according to any of the preceding claims, **characterized in that** the polybutadiene moiety has 0% to 80%, preferably 0% to 30%, more preferably 0% to 10%, especially preferably 0% to 5% of the double bonds present as 1,2 vinyl double bonds, and 20% to 100%, preferably 70% to 100%, more preferably 90% to 100%, especially preferably 95% to 100% of the double bonds present as 1,4 double bonds.

5. Composition according to any of the preceding claims, **characterized in that** the compound was prepared based on linear polybutadienes.

6. Composition according to any of the preceding claims, **characterized in that** the compound has no (in comb position) polybutadienes.

7. Composition according to any of the preceding claims, **characterized in that** the compound has exclusively pendant (in comb position) repeat units (U), (V) and/or (W).

8. Composition according to any of the preceding claims, **characterized in that** the average molar mass of the B radical, determined by the method specified in the description, is from 40 g/mol to 20 000 g/mol, preferably from 100 g/mol to 15 000 g/mol, more preferably from 200 g/mol to 10 000 g/mol.

9. Composition according to any of the preceding claims, **characterized in that** 2 to 100% by weight, preferably 5 - 70% by weight, more preferably 5 - 30% by weight of the compound is used, based on the total composition.

10. Composition according to any of the preceding claims, **characterized in that** said composition comprises at least one emulsifier, preferably selected from the group of the anionic, cationic or non-ionic emulsifiers or mixtures thereof.

11. Composition according to any of the preceding claims, **characterized in that** said composition has a viscosity, measured in a 5% aqueous solution at 20°C to DIN 53015, of 50 - 5000 mPa s, preferably 100 - 2000 mPa s and more preferably 100 - 1000 mPa s.

12. Composition according to any of the preceding claims, **characterized in that** said composition comprises at least one thickener, preferably selected from the group consisting of associative thickeners such as hydrophobically modified polyacrylates (HASE), hydrophobically modified cellulose ethers (HMHEC), hydrophobically modified polyacrylamides (HMPAM), hydrophobically modified polyethers (HMPE) and associative polyurethane thickeners, modified celluloses, organic polymers such as polyvinyl alcohols, polyacrylic acid and polymethacrylic acids, polyacrylamides, polyvinylpyrrolidone and polyethylene glycols, natural thickeners such as starch, gelatins, casein or konjac flour and also chemically modified types thereof, and organic thickeners such as metal soaps, hardened castor oil and alkoxylates thereof and chemically modified fat derivatives or else inorganic compounds such as sheet silicates (bentonite, hectorite) or (hydrated) Si02 particles, which may also be modified.

13. Composition according to any of the preceding claims, **characterized in that** said composition comprises at least one solid, preferably selected from the group consisting of silicas, which may be present in modified or unmodified form, or (alkaline earth) alkali metal soaps such as calcium stearate, or others and mixtures thereof.

14. Use of the composition according to any of the preceding claims as a defoamer additive, as a flow control additive and/or as a substrate wetting additive.

15. Use of the composition according to any of the preceding claims for preparing dispersions, millbases, paints, coatings or printing inks, inkjets, grind resins, pigment concentrates, colour preparations, pigment preparations, filler preparations or coating compositions.

16. Use of a compound based on polybutadienes according to any of Claims 1 - 8 for preparing a defoamer composition.

## Revendications

1. Composition d'antimousse contenant un composé à base de polybutadiène comprenant au moins un motif récurrent choisi dans le groupe constitué par les radicaux divalents 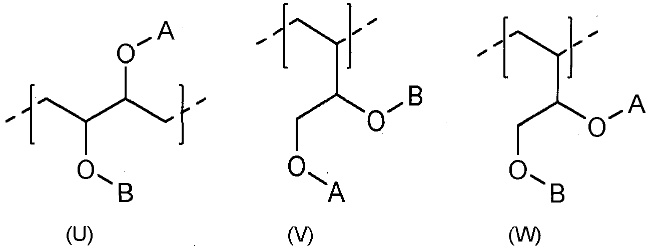 dans lesquels
A représente, à chaque fois indépendamment, un radical organique monovalent ou un radical hydrogène,
est choisi, de préférence, à chaque fois indépendamment, dans le groupe constitué par les radicaux hydrocarbonés monovalents comprenant 1 à 6 atomes de carbone,
est choisi, de manière particulièrement préférée, à chaque fois indépendamment, dans le groupe constitué par les radicaux alkyle comprenant 1 à 4 atomes de carbone ; B est choisi, à chaque fois indépendamment, dans le groupe constitué par les radicaux de formule (4a) 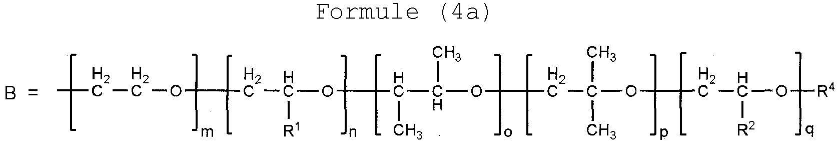 est choisi, de préférence, à chaque fois indépendamment, dans le groupe constitué par les radicaux de formule (4b) 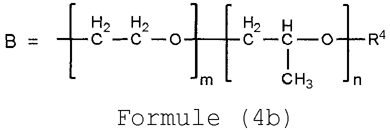 est choisi, de manière particulièrement préférée, à chaque fois indépendamment, dans le groupe constitué par les radicaux de formule (4c) 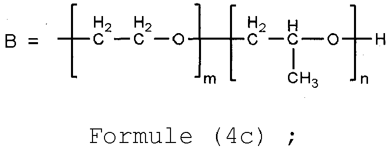
R¹ est choisi, à chaque fois indépendamment, dans le groupe constitué par les radicaux hydrocarbonés monovalents comprenant 1 à 16 atomes de carbone, représente, de préférence, à chaque fois indépendamment, un radical alkyle comprenant 1 à 16 atomes de carbone ou un radical phényle,
représente, de manière particulièrement préférée, à chaque fois indépendamment, un radical méthyle, un radical éthyle ou un radical phényle ;
R² représente un radical de formule -CH₂-O-R³ ;
R³ est choisi, à chaque fois indépendamment, dans le groupe constitué par les radicaux hydrocarbonés monovalents comprenant 3 à 18 atomes de carbone ;
représente, de préférence, à chaque fois indépendamment, un radical allyle, un radical butyle, un radical alkyle comprenant 8 à 15 atomes de carbone ou un radical phényle, qui peut être substitué par des radicaux monovalents choisis parmi les radicaux hydrocarbonés comprenant 1 à 4 atomes de carbone ;
représente de manière particulièrement préférée un radical tert-butylphényle ou un radical o-crésyle ;
R⁴ représente, à chaque fois indépendamment, un radical organique monovalent comprenant 1 à 18 atomes de carbone ou hydrogène, de préférence hydrogène ;
et
m, n, o, p et q représentent, à chaque fois indépendamment les uns des autres, 0 à 300, de préférence 0 à 200, de manière particulièrement préférée 0 à 100, à condition que la somme de m, n, o, p et q soit supérieure à 1, de préférence supérieure à 5, de manière particulièrement préférée supérieure à 10 ;
que le radical B présente au moins un motif récurrent selon 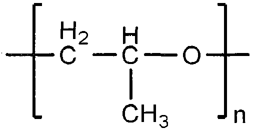 et chaque permutation des motifs récurrents dans le radical B est incluse.

2. Composition selon la revendication 1, **caractérisée en ce que** m, n, o, p et q représentent, à chaque fois indépendamment les uns des autres, 0 à 300, de préférence 0 à 200, de manière particulièrement préférée 0 à 100, à condition que la somme de m, n, o, p et q soit supérieure à 1, de préférence supérieure à 5, de manière particulièrement préférée supérieure à 10.

3. Composition selon l'une quelconque des revendications susmentionnées, **caractérisée en ce que** la masse moléculaire moyenne en nombre Mₙ de la partie polybutadiène, déterminée selon le procédé indiqué dans la description, est de 200 g/mole à 20.000 g/mole, de préférence de 500 g/mole à 10.000 g/mole, de manière particulièrement préférée de 700 g/mole à 5000 g/mole.

4. Composition selon l'une quelconque des revendications susmentionnées, **caractérisée en ce que** la partie de polybutadiène présente, à raison de 0% à 80%, de préférence de 0% à 30%, de manière particulièrement préférée de 0% à 10%, de manière tout particulièrement préférée de 0% à 5% des doubles liaisons contenues, des doubles liaisons de type 1,2-vinyle et, à raison de 20% à 100%, de préférence de 70% à 100%, de manière particulièrement préférée de 90% à 100%, de manière tout particulièrement préférée de 95% à 100% des doubles liaisons contenues, des doubles liaisons de type 1,4.

5. Composition selon l'une quelconque des revendications susmentionnées, **caractérisée en ce que** le composé a été préparé à base de polybutadiènes linéaires.

6. Composition selon l'une quelconque des revendications susmentionnées, **caractérisée en ce que** le composé ne présente pas de polybutadiènes (en position de peigne).

7. Composition selon l'une quelconque des revendications susmentionnées, **caractérisée en ce que** le composé présente exclusivement des motifs récurrents latéraux (en position de peigne) (U), (V) et/ou (W).

8. Composition selon l'une quelconque des revendications susmentionnées, **caractérisée en ce que** la masse moléculaire moyenne du radical B, déterminée selon le procédé indiqué dans la description, est de 40 g/mole à 20.000 g/mole, de préférence de 100 g/mole à 15.000 g/mole, de manière particulièrement préférée de 200 g/mole à 10.000 g/mole.

9. Composition selon l'une quelconque des revendications susmentionnées, **caractérisée en ce qu'**on utilise 2 à 100% en poids, de préférence 5 - 70% en poids, de manière particulièrement préférée 5 - 30% en poids du composé, par rapport à la composition totale.

10. Composition selon l'une quelconque des revendications susmentionnées, **caractérisée en ce qu'**elle présente au moins un émulsifiant, de préférence choisi dans le groupe des émulsifiants anioniques, cationiques ou non ioniques ou leurs mélanges.

11. Composition selon l'une quelconque des revendications susmentionnées, **caractérisée en ce qu'**elle présente une viscosité, mesurée dans une solution aqueuse à 5% en poids à 20°C selon la norme DIN 53015, de 50 - 5000 mPa.s, de préférence de 100 - 2000 mPa.s et de manière particulièrement préférée de 100 -1000 mPa.s.

12. Composition selon l'une quelconque des revendications susmentionnées, **caractérisée en ce qu'**elle présente au moins un épaississant, de préférence choisi dans le groupe constitué par les épaississants associatifs, tels que les polyacrylates modifiés de manière hydrophobe (HASE), les éthers de cellulose modifiés de manière hydrophobe (HMHEC), les polyacrylamides modifiés de manière hydrophobe (HMPAM), les polyéthers modifiés de manière hydrophobe (HMPE) ou, selon le cas, les épaississants associatifs à base de polyuréthane, les celluloses modifiées, les polymères organiques tels que les poly(alcools vinyliques), le poly(acide acrylique) et les poly(acides méthacryliques), les polyacrylamides, la polyvinylpyrrolidone ainsi que les polyéthylèneglycols, les épaississants naturels tels que l'amidon, la gélatine, la caséine ou la farine de racine de konjac ainsi que leurs types chimiquement modifiés et les épaississants organiques tels que les savons métalliques, l'huile de ricin durcie et ses alcoxylates ou dérivés gras chimiquement modifiés ou également les composés organiques tels que les silicates à couches (bentonite, hectorite) ou les particules de SiO₂ (hydratées), qui peuvent également être modifiées.

13. Composition selon l'une quelconque des revendications susmentionnées, **caractérisée en ce qu'**elle présente au moins un solide, de préférence choisi dans le groupe constitué par les silices, qui peuvent se trouver sous forme modifiée ou non modifiée, ou les savons métalliques de métal alcalin ou alcalino-terreux, tels que par exemple le stéarate de calcium ou autres ainsi que leurs mélanges.

14. Utilisation de la composition selon l'une quelconque des revendications susmentionnées comme additif antimousse, comme additif d'étalement et/ou comme additif de mouillage de substrat.

15. Utilisation de la composition selon l'une quelconque des revendications susmentionnées pour la préparation de dispersions, de produits broyés, de peintures, de vernis ou d'encres d'imprimerie, d'encres pour jet d'encre, de résines broyées, de concentrats pigmentaires, de préparations colorantes, de préparations pigmentaires, de préparations de charges ou de compositions de revêtement.

16. Utilisation d'un composé à base de polybutadiènes selon l'une quelconque des revendications susmentionnées 1 - 8 pour la préparation d'une composition d'antimousse.
